# EUROPEAN PATENT APPLICATION

(11) **EP 4 488 651 A1**
(43) Date of publication of application: **08.01.2025**
(21) Application number: 23862418.3
(22) Date of filing: 06.09.2023
(51) Int. Cl.: G01M 7/02, G01M 10/00

(54) **FLOW-INDUCED VIBRATION TEST APPARATUS AND METHOD, COMPUTER DEVICE, STORAGE MEDIUM, AND PRODUCT**

(30) Priority: 08.09.2022 CN 202211096730
(71) Applicant: China Nuclear Power Design Company Ltd. (Shenzhen), Shenzhen, Guangdong 518172 (CN); China Nuclear Power Engineering Co., Ltd., Shenzhen, Guangdong 518124 (CN); China General Nuclear Power Corporation, Shenzhen, Guangdong 518028 (CN); CGN Power Co., Ltd., Shenzen, Guangdong 518028 (CN)
(72) Inventor: ZHU, Yong, Shenzhen, Guangdong 518172 (CN); HE, Kun, Shenzhen, Guangdong 518172 (CN); REN, Hongbing, Shenzhen, Guangdong 518172 (CN); LI, Kun, Shenzhen, Guangdong 518172 (CN); LIU, Pan, Shenzhen, Guangdong 518172 (CN); ZHANG, Li, Shenzhen, Guangdong 518172 (CN); ZHANG, Liqiang, Shenzhen, Guangdong 518172 (CN); XIONG, Guangming, Shenzhen, Guangdong 518172 (CN); MA, Wenhui, Shenzhen, Guangdong 518172 (CN); JIN, Ting, Shenzhen, Guangdong 518172 (CN); YAO, Bowei, Shenzhen, Guangdong 518172 (CN); WANG, Kuo, Shenzhen, Guangdong 518172 (CN)
(74) Representative: V.O.
(86) International application number: PCT/CN2023/117165
(87) International publication number: WO 2024/051724

(57) **Abstract**

The present application relates to a flow-induced vibration test apparatus and method, a computer device, a storage medium, and a product. The apparatus comprises: a flow channel groove, a test simulation body, and a collection device; the flow channel groove comprises a fluid inlet section (120), a fluid mixing section (140), a test section (160), and a fluid outlet section (180) connected in sequence; the fluid mixing section (140) is configured to mix the fluid flowing in from the fluid inlet section (120) to generate a mixed fluid; the mixed fluid flows through the test section (160) and flows out from the fluid outlet section (180); the test simulation body comprises a plurality of non-linear heat transfer pipes (220) and a support assembly (240), and the support assembly (240) is configured to fixedly mount the plurality of non-linear heat transfer pipes (220) in the test section (160); and the collection device is provided on the plurality of non-linear heat transfer pipes (220), and is configured to collect test data when the plurality of non-linear heat transfer pipes (220) undergo flow-induced vibration when the mixed fluid flows into the test section (160).

## Description

### CROSS-REFERENCE TO RELATED APPLICATIONS

This application claims priority to Chinese Patent Application No. 202211096730.7, entitled "FLOW-INDUCED VIBRATION TEST APPARATUS AND METHOD, COMPUTER DEVICE, STORAGE MEDIUM, AND PRODUCT" and filed with the China Patent Office on September 8, 2022, the entire contents of which are incorporated herein by reference.

### TECHNICAL FIELD

The present application relates to the field of flow-induced vibration analysis technologies in a tube bundle region of a heat exchanger, and in particular to a flow-induced vibration test apparatus and method, a computer device, a storage medium, and a product.

### BACKGROUND

A large natural circulation heat exchanger is a large device that transfers part of heat of a hot fluid to a cold fluid, with a main function of ensuring a temperature requirement of the heat exchanger during operation. A heat transfer pipe is arranged in a tube bundle region of the large natural circulation heat exchanger. The heat transfer pipe can exchange heat between media on shell and tube sides, and can also serve as a pressure boundary of a reactor cooling system to contain radioactive materials. Therefore, structural integrity of the heat transfer pipe is related to safe operation of the entire heat exchanger. During steady-state operation of the large natural circulation heat exchanger, if the fluid on the shell side laterally washes the heat transfer pipe in the heat exchanger, the heat transfer pipe may be damaged due to excessive flow-induced vibration in the heat transfer pipe. Therefore, there is a need to design a flow-induced vibration test apparatus to verify a safety margin when the heat transfer pipe in the large natural circulation heat exchanger undergoes flow-induced vibration.

In the conventional art, generally, the heat transfer pipe and a support structure thereof are simplified, and the flow-induced vibration test apparatus is designed based on the heat transfer pipe and the support structure that are simplified. However, in actual manufacturing, the heat transfer pipe used in the large natural circulation heat exchanger and the support structure thereof are relatively complex. Then, since the flow-induced vibration test apparatus in the conventional art uses the heat transfer pipe and the support structure that are simplified to simulate flow-induced vibration, flow-induced vibration behaviors of the heat transfer pipe in actual manufacturing cannot be accurately simulated.

Therefore, the safety margin when the heat transfer pipe in the large natural circulation heat exchanger undergoes flow-induced vibration cannot be accurately verified if the flow-induced vibration test apparatus in the conventional art is used. Accordingly, there is no guarantee that the large natural circulation heat exchanger can operate safely in actual manufacturing.

### SUMMARY

Based on this, there is a need to provide, with respect to the above technical problems, a flow-induced vibration test apparatus and method, a computer device, a storage medium, and a product that can ensure safe operation of the large natural circulation heat exchanger in actual manufacturing.

In a first aspect, the present application provides a flow-induced vibration test apparatus. The apparatus includes: a flow channel groove, a test simulation body, and a collection device; wherein
the flow channel groove includes a fluid inlet section, a fluid mixing section, a test section, and a fluid outlet section connected in sequence; wherein the fluid mixing section is configured to mix the fluid flowing in from the fluid inlet section to generate a mixed fluid; wherein the mixed fluid flows through the test section and flows out from the fluid outlet section;
the test simulation body includes a plurality of non-linear heat transfer pipes and a support assembly, wherein the support assembly is configured to fixedly mount the plurality of non-linear heat transfer pipes in the test section; and
the collection device is provided on the plurality of non-linear heat transfer pipes, and is configured to collect test data when the plurality of non-linear heat transfer pipes undergo flow-induced vibration upon the mixed fluid flows into the test section.

In an embodiment, the support assembly includes a bottom plate; wherein
the bottom plate is connected to a housing of the test section; the bottom plate is provided with a first through hole, and the bottom plate is provided with a heat transfer pipe fixing assembly; the mixed fluid flows from the fluid mixing section through the first through hole into the test section; and two ends of the plurality of non-linear heat transfer pipes are connected to the bottom plate through the heat transfer pipe fixing assembly.

In an embodiment, the support assembly further includes a support plate; wherein
the support plate is connected to the housing of the test section, the support plate is located between the bottom plate and the fluid outlet section, and the support plate is arranged on a straight section of each of the non-linear heat transfer pipes; and the support plate is provided with a second through hole, the mixed fluid flows through the second through hole into the fluid outlet section, and the plurality of non-linear heat transfer pipes pass through the second through hole and are in clearance fit with the second through hole in the support plate.

In an embodiment, the support assembly further includes an anti-vibration assembly and a fixing assembly; wherein
the anti-vibration assembly is arranged in a V-shape on a bending section of each of the non-linear heat transfer pipes; the anti-vibration assembly is provided with a third through hole respectively on two ends; and at least five anti-vibration assemblies are provided, and each of the anti-vibration assemblies includes at least six layers of anti-vibration bars; and
the fixing assembly includes at least five pairs of anti-vibration bar pull rods, and each pair of the anti-vibration bar pull rods passes through the third through hole in one of the anti-vibration assemblies and is connected to a housing of the test section.

In an embodiment, the support assembly further includes collars; wherein
the collars sleeve the anti-vibration bar pull rods, and distances between different layers of anti-vibration bars in each of the anti-vibration assemblies are determined by the collars.

In an embodiment, the collection device includes:
acceleration sensors arranged on inner walls of the plurality of non-linear heat transfer pipes, a housing of the flow channel groove, and a test bench; the acceleration sensors being configured to measure acceleration data of the plurality of non-linear heat transfer pipes and the test apparatus;
pressure sensors arranged on an outer wall of a target heat transfer pipe in the plurality of non-linear heat transfer pipes and pressure measuring points outside the plurality of non-linear heat transfer pipes and configured to measure pressure data of the plurality of non-linear heat transfer pipes and the fluid outside the plurality of non-linear heat transfer pipes; a distance between the target heat transfer pipe and the support assembly meeting a preset distance condition;
a temperature sensor arranged on an external outlet pipeline connected to the fluid outlet section and configured to measure temperature data of an entire test circuit; and
flow detection sensors arranged on the fluid inlet section and the fluid mixing section and configured to detect a flow rate of the fluid inputted into the fluid inlet section and a flow rate of the fluid inputted into the fluid mixing section.

In an embodiment, the fluid mixing section includes a first mixing section and a second mixing section connected in sequence; and a first fluid flows through the fluid inlet section into the first mixing section; wherein the first mixing section includes a second fluid inlet pipe, and a second fluid passes through the second fluid inlet pipe into the first mixing section and is mixed with the first fluid in the first mixing section to generate an intermediate mixed fluid; and
the second mixing section is provided with a packing layer, and the intermediate mixed fluid flows from the first mixing section into the second mixing section and is mixed through the packing layer to generate the mixed fluid.

In an embodiment, the fluid inlet section includes a first fluid inlet pipe, a fourth through hole, and a water baffle; and
the first fluid flows into the test apparatus through the first fluid inlet pipe; the fourth through hole is provided at one end of the first fluid inlet pipe, and the first fluid flows into the first mixing section through the fourth through hole; and the water baffle is arranged on one side of the fourth through hole to evenly distribute a flow rate of the first fluid.

In an embodiment, the test simulation body further includes a viewing window; wherein
the viewing window is arranged on a housing of the test apparatus between the fluid mixing section and the test section and is configured to observe a mixing situation of the first fluid and the second fluid.

In an embodiment, the support plate further includes a first support plate and a second support plate; wherein
the first support plate and the second support plate are arranged in sequence in the test section, and the first support plate and the second support plate are both arranged on the straight section of the plurality of non-linear heat transfer pipes.

In an embodiment, the non-linear heat transfer pipes include any one of U-shaped heat transfer pipes and spiral heat transfer pipes.

In a second aspect, the present application further provides a flow-induced vibration test simulation method. The method is applied to the flow-induced vibration test apparatus in any of the embodiments in the first aspect. The method includes:
controlling the mixed fluid to flow into the test section according to preset fluid flow parameters; the preset fluid flow parameters including a fluid flow velocity parameter and a fluid void fraction parameter;
collecting, through the collection device upon the mixed fluid flows into the test section, test data when the flow-induced vibration test apparatus undergoes flow-induced vibration; the test data including at least one of acceleration data, strain data, pressure data, temperature data, and flow rate data; and
analyzing the preset fluid flow parameters and the test data corresponding to the preset fluid flow parameters to determine vibration features when the plurality of non-linear heat transfer pipes undergo flow-induced vibration.

In a third aspect, the present application further provides a flow-induced vibration test simulation apparatus. The apparatus includes:
a mixed fluid inflow module configured to control the mixed fluid to flow into the test section according to preset fluid flow parameters; the preset fluid flow parameters including a fluid flow velocity parameter and a fluid void fraction parameter;
a test data collection module configured to collect, through a collection device when the mixed fluid flows into the test section, test data when a flow-induced vibration test apparatus undergoes flow-induced vibration; the test data including at least one of acceleration data, strain data, pressure data, temperature data, and flow rate data; and
a test data analysis module configured to analyze the preset fluid flow parameters and the test data corresponding to the preset fluid flow parameters to determine vibration features when a plurality of non-linear heat transfer pipes undergo flow-induced vibration.

In a fourth aspect, the present application provides a flow-induced vibration test apparatus design method. The method is applied to the flow-induced vibration test apparatus in any of the embodiments in the first aspect. The method includes:
acquiring an initial model of the flow-induced vibration test apparatus; the initial model including an initial flow channel groove and an initial test simulation body, the initial test simulation body including a plurality of non-linear heat transfer pipes and a support assembly;
performing flow-induced vibration analysis and flow field analysis on the initial model to determine first initial parameters of the initial flow channel groove and the plurality of non-linear heat transfer pipes; the first initial parameters being parameters of the initial flow channel groove and the plurality of non-linear heat transfer pipes when a preset envelope requirement is met when the initial model undergoes flow-induced vibration and a flow field of the initial model meets a preset flow field requirement;
assigning the first initial parameters to the initial flow channel groove in the initial model and the plurality of non-linear heat transfer pipes respectively to generate a first intermediate model, and performing stress analysis on the first intermediate model to determine second initial parameters of the support assembly in the first intermediate model when a preset stress condition is met;
assigning the second initial parameters to the support assembly in the first intermediate model to obtain a second intermediate model, and conducting a fluid mixing experiment on the second intermediate model to determine third initial parameters of the initial flow channel groove in the second intermediate model when a preset fluid mixing experiment condition is met; and
generating the flow-induced vibration test apparatus based on the first initial parameters of the initial flow channel groove and the plurality of non-linear heat transfer pipes, the second initial parameters of the support assembly, and the third initial parameters of the initial flow channel groove.

In a fifth aspect, the present application further provides a computer device. The computer device includes a memory and a processor, wherein the memory stores a computer program, and the processor, when executing the computer program, implements operations of the method in the second aspect.

In a sixth aspect, the present application further provides a computer-readable storage medium. The computer-readable storage medium has a computer program stored therein, wherein when the computer program is executed by a processor, operations of the method in the second aspect are implemented.

In a seventh aspect, the present application further provides a computer program product. The computer program product includes a computer program, wherein when the computer program is executed by a processor, operations of the method in the second aspect are implemented.

### BRIEF DESCRIPTION OF THE DRAWINGS

FIG. 1 is a schematic structural diagram of a flow-induced vibration test apparatus according to an embodiment;
FIG. 2 is a schematic structural diagram of a bottom plate of the flow-induced vibration test apparatus according to an embodiment;
FIG. 3 is a schematic structural diagram of a support plate of the flow-induced vibration test apparatus according to an embodiment;
FIG. 4 is a schematic structural diagram of an anti-vibration assembly and a fixing assembly of the flow-induced vibration test apparatus according to an embodiment;
FIG. 5 is a schematic diagram of mounting of a first acceleration sensor on a heat transfer pipe according to another embodiment;
FIG. 6 is a schematic diagram of wiring of the first acceleration sensor on the heat transfer pipe according to another embodiment;
FIG. 7 is a schematic diagram of mounting of a second acceleration sensor on the test apparatus according to another embodiment;
FIG. 8 is a schematic diagram of mounting of a second acceleration sensor on a support bench according to another embodiment;
FIG. 9 is a schematic diagram of mounting of a first pressure sensor on the heat transfer pipe according to another embodiment;
FIG. 10 is a schematic diagram of wiring of the first pressure sensor on the heat transfer pipe according to another embodiment;
FIG. 11 is a schematic diagram of mounting positions of the first acceleration sensor and the first pressure sensor according to another embodiment;
FIG. 12 is a schematic diagram of mounting of a second pressure sensor on the heat transfer pipe according to another embodiment;
FIG. 13 is a schematic structural diagram of a fluid mixing section of the flow-induced vibration test apparatus according to an embodiment;
FIG. 14 is a schematic structural diagram of fourth through holes in a fluid inlet section according to an embodiment;
FIG. 15 is a diagram of an application environment of a flow-induced vibration test simulation method according to an embodiment;
FIG. 16 is a schematic flowchart of the flow-induced vibration test simulation method according to an embodiment;
FIG. 17 is a schematic flowchart of a flow-induced vibration test apparatus design method according to an embodiment;
FIG. 18 is a schematic diagram of a scale of a tube array in flow field pre-analysis according to an embodiment;
FIG. 19 is a schematic diagram of inter-tube flow velocity distribution of the heat transfer pipe in a test section according to an embodiment;
FIG. 20 is a schematic diagram of a position of the heat transfer pipe required to be measured in a high flow velocity region according to an embodiment;
FIG. 21 is a diagram of comparisons between inter-tube flow velocities under certain test conditions on a certain heat transfer pipe and steady-state operation of an actual product according to an embodiment;
FIG. 22 is a diagram of comparisons between fluid dynamic pressure under certain test conditions on a certain heat transfer pipe and steady-state operation of an actual product according to an embodiment;
FIG. 23 is a schematic structural diagram of a fluid mixing module performance test simulation body according to an embodiment;
FIG. 24 is a schematic diagram of mounting of the fluid mixing module performance test simulation body according to an embodiment;
FIG. 25 is a structural block diagram of a flow-induced vibration test simulation apparatus according to an embodiment; and
FIG. 26 is a diagram of an internal structure of a computer device according to an embodiment.

### DETAILED DESCRIPTION

In order to make the objectives, technical solutions, and advantages of the present application clearer, the present application will be further described in detail below with reference to the drawings and embodiments. It should be understood that specific embodiments described herein are intended merely to explain the present application and are not intended to limit the present application.

A large natural circulation heat exchanger is a large device that transfers part of heat of a hot fluid to a cold fluid, with a main function of ensuring a temperature requirement of the heat exchanger during operation. A heat transfer pipe is arranged in a tube bundle region of the large natural circulation heat exchanger. The heat transfer pipe can exchange heat between media on shell and tube sides, and can also serve as a pressure boundary of a reactor cooling system to contain radioactive materials. Therefore, structural integrity of the heat transfer pipe is related to the safe operation of the entire heat exchanger. During steady-state operation of the large natural circulation heat exchanger, if the fluid on the shell side laterally washes the heat transfer pipe in the heat exchanger, the heat transfer pipe may be damaged due to excessive flow-induced vibration in the heat transfer pipe. Therefore, there is a need to design a flow-induced vibration test apparatus to verify a safety margin when the heat transfer pipe in the large natural circulation heat exchanger undergoes flow-induced vibration.

In the conventional art, generally, the heat transfer pipe and a support structure thereof are simplified, and the flow-induced vibration test apparatus is designed based on the heat transfer pipe and the support structure that are simplified. However, in actual manufacturing, the heat transfer pipe used in the large natural circulation heat exchanger and the support structure thereof are relatively complex. Then, since the flow-induced vibration test apparatus in the conventional art uses the heat transfer pipe and the support structure that are simplified to simulate flow-induced vibration, the flow-induced vibration test apparatus in the conventional art cannot accurately simulate a flow-induced vibration behavior of a non-linear heat transfer pipe structure (such as a bending section of an inverted U-shaped heat transfer pipe) in actual manufacturing. The inverted U-shaped heat transfer pipe is a common structural form in the large natural circulation heat exchanger, and high-risk regions for flow-induced vibration in the inverted U-shaped heat transfer pipe are mainly concentrated in the bending section.

The heat transfer pipe in the flow-induced vibration test apparatus in the conventional art is obtained by structurally simplifying the heat transfer pipe in the large natural circulation heat exchanger in actual manufacturing. Therefore, the flow-induced vibration test apparatus can verify only first-order vibration characteristics of the heat transfer pipe when the flow-induced vibration behavior occurs, but cannot verify high-order vibration characteristics of the heat transfer pipe when the flow-induced vibration behavior occurs. Firstly, the flow-induced vibration test apparatus in the conventional art cannot simulate a support structure of a heat transfer pipe of a real product, and the support structure of the heat transfer pipe is a key factor affecting a flow-induced vibration response of the heat transfer pipe. Secondly, the flow-induced vibration test apparatus in the conventional art is small in scale and cannot simulate the flow-induced vibration behavior of the heat transfer pipe in a tube bundle at high flow velocities and large flow rates. Thirdly, a gas-water mixing section of a flow-induced vibration test body in the conventional art is small in size and has large fluid resistance, which cannot meet a verification requirement for a flow-induced vibration test at large flow rates in actual engineering projects. Therefore, the flow-induced vibration test apparatus in the conventional art cannot accurately simulate the flow-induced vibration behavior of the heat transfer pipe in actual manufacturing.

Therefore, the safety margin when the heat transfer pipe in the large natural circulation heat exchanger undergoes flow-induced vibration cannot be accurately verified if the flow-induced vibration test apparatus in the conventional art is used. Accordingly, there is no guarantee that the large natural circulation heat exchanger can operate safely in actual manufacturing.

Based on this, the present application provides a flow-induced vibration test apparatus that can ensure safe operation of the large natural circulation heat exchanger in actual manufacturing.

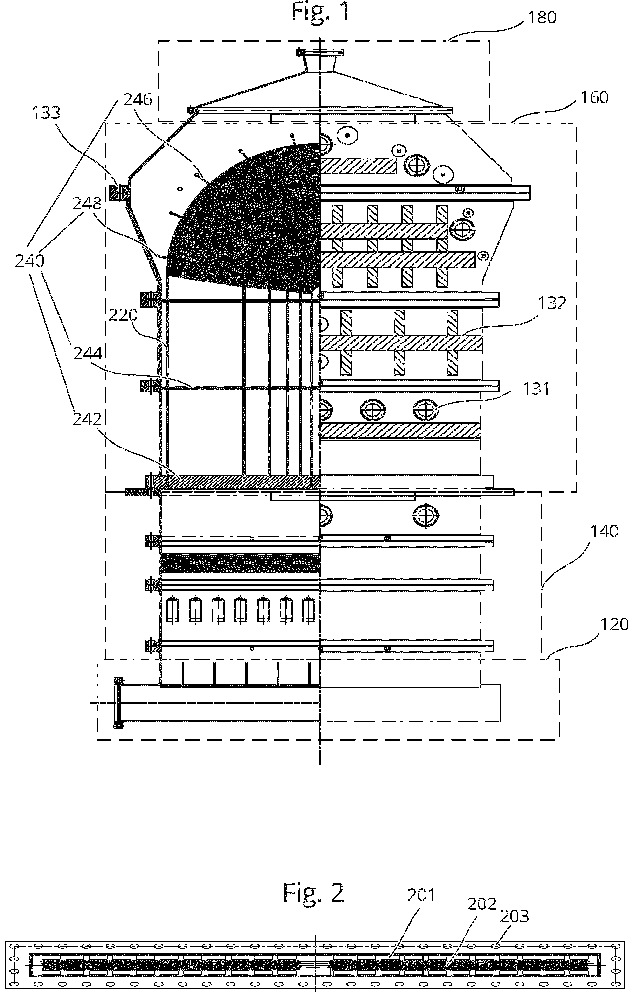

In an embodiment, as shown in FIG. 1, a flow-induced vibration test apparatus is provided. The apparatus includes: a flow channel groove, a test simulation body, and a collection device.

The flow channel groove includes a fluid inlet section 120, a fluid mixing section 140, a test section 160, and a fluid outlet section 180 connected in sequence. The fluid mixing section 140 is configured to mix the fluid flowing in from the fluid inlet section 120 to generate a mixed fluid. The mixed fluid flows through the test section 160 and flows out from the fluid outlet section.

The test simulation body includes a plurality of non-linear heat transfer pipes 220 and a support assembly 240. The support assembly 240 is configured to fixedly mount the plurality of non-linear heat transfer pipes in the test section 160.

The collection device is provided on the plurality of non-linear heat transfer pipes, and is configured to collect test data when the plurality of non-linear heat transfer pipes undergo flow-induced vibration upon the mixed fluid flows into the test section 160.

The support assembly 240 includes a bottom plate 242, a support plate 244, an anti-vibration assembly 246, a fixing assembly 248, and collars. A housing of the flow-induced vibration test apparatus includes a viewing window 131, a reinforced rib 132, and a flange 133. The viewing window 131 is configured for a worker to observe a mixing situation of a first fluid and a second fluid. The reinforced rib 132 is configured to support the housing and prevent deformation of the apparatus during flow-induced vibration. The fluid inlet section 120, the fluid mixing section 140, the test section 160, and the fluid outlet section 180 are connected through the flange 133.

In embodiments of the present application, a flow-induced vibration test apparatus is provided, including a flow channel groove, a test simulation body, and a collection device. The flow channel groove includes a fluid inlet section 120, a fluid mixing section 140, a test section 160, and a fluid outlet section 180 connected in sequence. The fluid mixing section 140 is configured to mix the fluid flowing in from the fluid inlet section 120 to generate a mixed fluid. The mixed fluid flows through the test section 160 and flows out from the fluid outlet section 180. The test simulation body includes a plurality of non-linear heat transfer pipes and a support assembly 240. The support assembly 240 is configured to fixedly mount the plurality of non-linear heat transfer pipes in the test section 160. The collection device is provided on the plurality of non-linear heat transfer pipes, and is configured to collect test data when the plurality of non-linear heat transfer pipes undergo flow-induced vibration when the mixed fluid flows into the test section 160. The flow-induced vibration test apparatus in the present application is designed using a plurality of non-linear heat transfer pipes with similar complexity to the actual, and the plurality of non-linear heat transfer pipes can more accurately simulate the structure of the non-linear heat transfer pipe in the tube bundle region of the large natural circulation heat exchanger in actual manufacturing, thereby more accurately simulating flow-induced vibration of the fluid in actual manufacturing. In addition, the support assembly 240 strengthens the support structure of the plurality of non-linear heat transfer pipes, and the combined use of the flow channel groove and the through hole in the support assembly 240 makes transfer of the mixed fluid more convenient, thereby more accurately simulating the flow-induced vibration behavior of the heat transfer pipe in the tube bundle region of the large natural circulation heat exchanger in actual manufacturing. Moreover, the flow-induced vibration test apparatus is large in scale and includes the fluid mixing section 140, which can achieve uniform mixing of fluids in the test section 160, thereby verifying the flow-induced vibration behavior under conditions of large flow rates and more accurately verifying the safety margin when the heat transfer pipe in the large natural circulation heat exchanger undergoes flow-induced vibration. Accordingly, safe operation of the large natural circulation heat exchanger in actual manufacturing can be ensured.

In an embodiment, the support assembly 240 includes a bottom plate 242; the bottom plate 242 is connected to a housing of the test section 160; the bottom plate 242 is provided with a first through hole, and the bottom plate 242 is provided with a heat transfer pipe fixing assembly 202; the mixed fluid flows from the fluid mixing section 140 through the first through hole into the test section 160; and two ends of the plurality of non-linear heat transfer pipes are connected to the bottom plate 242 through the heat transfer pipe fixing assembly 202.

As shown in FIG. 2 which is a schematic structural diagram of the bottom plate 242 in the support assembly 240 of the flow-induced vibration test apparatus according to an embodiment, the support assembly 240 of the flow-induced vibration test apparatus further includes the bottom plate 242.

The bottom plate 242 includes a first through hole 201, a heat transfer pipe fixing assembly 202, and a bolt hole 203. The bottom plate 242 is provided with a plurality of first through holes 201 to cause the mixed fluid to flow from the fluid mixing section 140 into the test section 160 through the first through holes 201. The bottom plate 242 is provided with the heat transfer pipe fixing assembly 202 to weld two ends of the plurality of non-linear heat transfer pipes to the bottom plate 242 through the heat transfer pipe fixing assembly 202. The bottom plate 242 is provided with the bolt hole 203. The bolt hole 203 is configured to connect the flange, so that the bottom plate 242 is connected to the housing of the test section 160 through the flange.

In the embodiments of the present application, the support assembly 240 includes the bottom plate 242, and the bottom plate 242 is provided with the plurality of first through holes 201 to cause the mixed fluid to flow from the fluid mixing section 140 into the test section 160 through the first through holes 201, making transfer of the mixed fluid more convenient. The bottom plate 242 is provided with the heat transfer pipe fixing assembly 202 to weld two ends of the plurality of non-linear heat transfer pipes to the bottom plate 242 through the heat transfer pipe fixing assembly 202, strengthening the support structure of the plurality of non-linear heat transfer pipes. The bottom plate 242 is provided with the bolt hole 203. The bolt hole 203 is configured to connect the flange, so that the bottom plate 242 is connected to the housing of the test section 160 through the flange, strengthening stability of the flow-induced vibration test apparatus. Mutual cooperation of the first through hole 201, the heat transfer pipe fixing assembly 202, and the bolt hole 203 in the bottom plate 242 enables the flow-induced vibration test apparatus to more accurately simulate the flow-induced vibration behavior of the heat transfer pipe in the tube bundle region of the large natural circulation heat exchanger in actual manufacturing, thereby more accurately verifying the safety margin when the heat transfer pipe in the large natural circulation heat exchanger undergoes flow-induced vibration. Accordingly, safe operation of the large natural circulation heat exchanger in actual manufacturing can be ensured.

In an embodiment, the support assembly 240 further includes a support plate 244; the support plate 244 is connected to the housing of the test section 160, the support plate 244 is located between the bottom plate 242 and the fluid outlet section 180, and the support plate 244 is arranged on a straight section of the non-linear heat transfer pipe; and the support plate 244 is provided with a second through hole, the mixed fluid flows through the second through hole into the fluid outlet section 180, and the plurality of non-linear heat transfer pipes pass through the second through hole and are in clearance fit with the second through hole in the support plate 244.

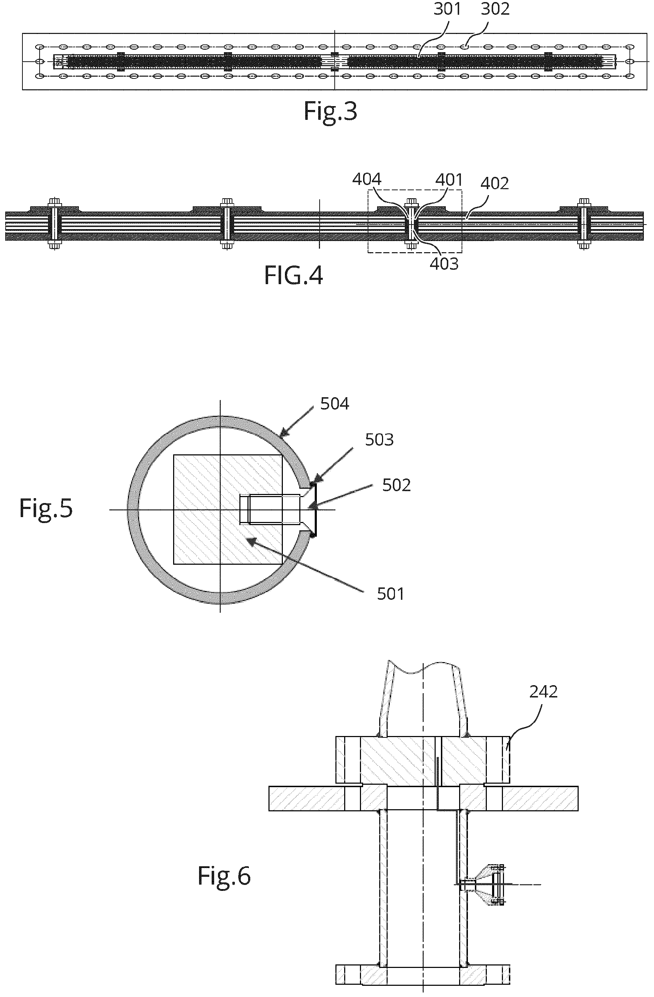

FIG. 3 is a schematic structural diagram of the support plate 244 of the flow-induced vibration test apparatus according to an embodiment. The support assembly 240 of the flow-induced vibration test apparatus further includes the support plate 244.

The support plate 244 includes a second through hole 301 and a bolt hole 302. The support plate 244 is provided with the second through hole 301, the mixed fluid flows into the fluid outlet section 180 through the second through hole 301, and straight sections of the plurality of non-linear heat transfer pipes pass through the second through hole 301 and are in clearance fit with the second through hole 301 in the support plate 244. The support plate 244 is provided with the bolt hole 302, and the bolt hole 302 is configured to connect a flange, so that the support plate 244 is connected to the housing of the test section 160 through the flange. Moreover, the support plate 244 is located between the bottom plate 242 and the fluid outlet section 180, and the support plate 244 is arranged on the straight section of the non-linear heat transfer pipe.

In the embodiments of the present application, the support assembly 240 includes the support plate 244, the support plate 244 is provided with the second through hole 301, and the mixed fluid flows into the fluid outlet section 180 through the second through hole 301, making transfer of the mixed fluid more convenient. The straight sections of the plurality of non-linear heat transfer pipes pass through the second through hole 301 and are in clearance fit with the second through hole 301 in the support plate 244, strengthening a support structure of the straight section of the plurality of non-linear heat transfer pipes. The support plate 244 is provided with the bolt hole 302, and the bolt hole 302 is configured to connect a flange, so that the support plate 244 is connected to the housing of the test section 160 through the flange, strengthening stability of the flow-induced vibration test apparatus. Mutual cooperation of the second through hole 301 and the bolt hole 302 in the support plate 244 enables the flow-induced vibration test apparatus to more accurately simulate the flow-induced vibration behavior of the heat transfer pipe in the tube bundle region of the large natural circulation heat exchanger in actual manufacturing, thereby more accurately verifying the safety margin when the heat transfer pipe in the large natural circulation heat exchanger undergoes flow-induced vibration. Accordingly, safe operation of the large natural circulation heat exchanger in actual manufacturing can be ensured.

In an embodiment, the support assembly 240 further includes an anti-vibration assembly 246 and a fixing assembly 248.

The anti-vibration assembly 246 is arranged in a V-shape on a bending section of each of the non-linear heat transfer pipes. The anti-vibration assembly 246 is provided with a third through hole respectively on two ends. At least five anti-vibration assemblies 246 are provided, and each of the anti-vibration assemblies 246 includes at least six layers of anti-vibration bars.

The fixing assembly 248 includes at least five pairs of anti-vibration bar pull rods, and each pair of the anti-vibration bar pull rods passes through the third through hole in one of the anti-vibration assemblies 246 and is connected to the housing of the test section 160.

FIG. 4 is a schematic structural diagram of the anti-vibration assembly 246 and the fixing assembly 248 of the flow-induced vibration test apparatus according to an embodiment. The support assembly 240 of the flow-induced vibration test apparatus further includes the anti-vibration assembly 246 and the fixing assembly 248.

The anti-vibration assembly 246 is arranged in a V-shape on a bending section of the non-linear heat transfer pipe. The anti-vibration assembly 246 is provided with a third through hole 401 respectively on two ends. At least five anti-vibration assemblies 246 are provided, and each of the anti-vibration assemblies 246 includes at least six layers of anti-vibration bars 402. In the bending section of the heat transfer pipe, the anti-vibration bar 402 is spaced apart from the non-linear heat transfer pipe, and the anti-vibration bar 402 is configured to fix the bending section of the non-linear heat transfer pipe.

The fixing assembly 248 includes at least five pairs of anti-vibration bar pull rods 403, each pair of the anti-vibration bar pull rods 403 passes through the third through hole 401 in one of the anti-vibration assemblies 246 and is connected to the housing of the test section 160, and two ends of each pair of the anti-vibration bar pull rods 403 are fixed by nuts.

In the embodiments of the present application, the support assembly 240 further includes the anti-vibration assembly 246 and the fixing assembly 248, and in the bending section of the heat transfer pipe, the anti-vibration bar 402 in the anti-vibration assembly 246 is spaced apart from the non-linear heat transfer pipe, and the anti-vibration bar 402 is configured to fix the bending section of the non-linear heat transfer pipe. The fixing assembly 248 includes at least five pairs of anti-vibration bar pull rods 403, and the anti-vibration bar pull rod 403 is configured to fix the anti-vibration assembly 246. The anti-vibration assembly 246 and the fixing assembly 248 strengthen the support structure of the bending sections of the plurality of non-linear heat transfer pipes, thereby strengthening stability of the flow-induced vibration test apparatus, which enables the flow-induced vibration test apparatus to more accurately simulate the flow-induced vibration behavior of the heat transfer pipe in the tube bundle region of the large natural circulation heat exchanger in actual manufacturing, thereby more accurately verifying the safety margin when the heat transfer pipe in the large natural circulation heat exchanger undergoes flow-induced vibration. Accordingly, safe operation of the large natural circulation heat exchanger in actual manufacturing can be ensured.

In an embodiment, the support assembly 240 further includes collars; wherein the collars sleeve the anti-vibration bar pull rods, and distances between different layers of anti-vibration bars in each of the anti-vibration assemblies 246 are determined by the collars.

As shown in FIG. 4, the support assembly 240 of the flow-induced vibration test apparatus further includes collars 404.

The collars 404 sleeve the anti-vibration bar pull rods 403, and distances between different layers of anti-vibration bars 402 in each of the anti-vibration assemblies 246 are determined by the collars 404.

In the embodiments of the present application, the support assembly 240 further includes collars 404, and the collars 404 are configured to determine distances between different layers of anti-vibration bars 402 in each of the anti-vibration assemblies 246. The use of the collars 404 in conjunction with the anti-vibration assembly 246 and the fixing assembly 248 strengthens the support structure of the bending sections of the plurality of non-linear heat transfer pipes, thereby strengthening stability of the flow-induced vibration test apparatus, which enables the flow-induced vibration test apparatus to more accurately simulate the flow-induced vibration behavior of the heat transfer pipe in the tube bundle region of the large natural circulation heat exchanger in actual manufacturing, thereby more accurately verifying the safety margin when the heat transfer pipe in the large natural circulation heat exchanger undergoes flow-induced vibration. Accordingly, safe operation of the large natural circulation heat exchanger in actual manufacturing can be ensured.

In an embodiment, the collection device of the flow-induced vibration test apparatus includes:
acceleration sensors arranged on inner walls of the plurality of non-linear heat transfer pipes, a housing of the flow channel groove, and a test bench; the acceleration sensors being configured to measure acceleration data of the plurality of non-linear heat transfer pipes and the test apparatus;
pressure sensors arranged on an outer wall of a target heat transfer pipe in the plurality of non-linear heat transfer pipes and pressure measuring points outside the plurality of non-linear heat transfer pipes and configured to measure pressure data of the plurality of non-linear heat transfer pipes and the fluid outside the plurality of non-linear heat transfer pipes; a distance between the target heat transfer pipe and the support assembly meeting a preset distance condition;
a temperature sensor arranged on an external outlet pipeline connected to the fluid outlet section and configured to measure temperature data of an entire test circuit; and
flow detection sensors arranged on the fluid inlet section and the fluid mixing section and configured to detect a flow rate of the fluid inputted into the fluid inlet section and a flow rate of the fluid inputted into the fluid mixing section.

The acceleration sensors include first acceleration sensors and second acceleration sensors. The first acceleration sensors are arranged on inner walls of the plurality of non-linear heat transfer pipes to measure acceleration data of the plurality of non-linear heat transfer pipes. Optionally, the first acceleration sensor may be a three-axis accelerometer. That is, the three-axis accelerometer may be mounted on a three-axis acceleration measuring point as the first acceleration sensor to measure acceleration values when the mixed fluid undergoes flow-induced vibration under different preset fluid flow parameters. As shown in FIG. 5 which is a schematic diagram of mounting of the first acceleration sensor on the heat transfer pipe according to another embodiment, an accelerometer 501 is mounted in a non-linear heat transfer pipe 504 through a screw 502 and a rubber ring 503. As shown in FIG. 6 which is a schematic diagram of wiring of the first acceleration sensor on the heat transfer pipe according to another embodiment, after the three-axis accelerometer is successfully mounted, a wire on the three-axis accelerometer is led out of the test section 160 through a small hole in the bottom plate 242, wiring is then performed along a flow channel inner wall of the fluid mixing section 140, and the wire on the three-axis accelerometer is led out of the flow-induced vibration test apparatus through an opening in the housing and is connected to a test analysis device.

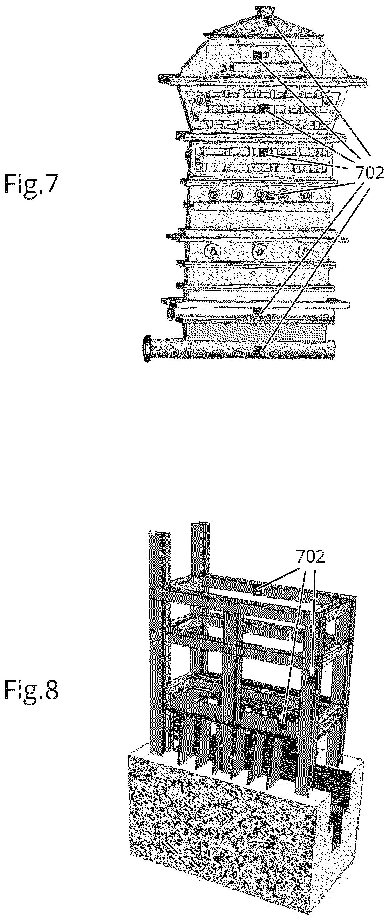

The second acceleration sensors are arranged on a housing of the flow channel groove and the test bench and are configured to measure acceleration data of the test apparatus. Specifically, FIG. 7 is a schematic diagram of mounting of the second acceleration sensor on the test apparatus according to another embodiment. FIG. 8 is a schematic diagram of mounting of a second acceleration sensor on a support bench according to another embodiment. Optionally, the second acceleration sensor may be an accelerometer. Accelerometers 702 are arranged on the test bench and a body of the test apparatus, and a total of 10 second acceleration sensors are used for measurement. The second acceleration sensors on the test bench and the test apparatus are configured to monitor acceleration of the test bench and the test apparatus during vibration.

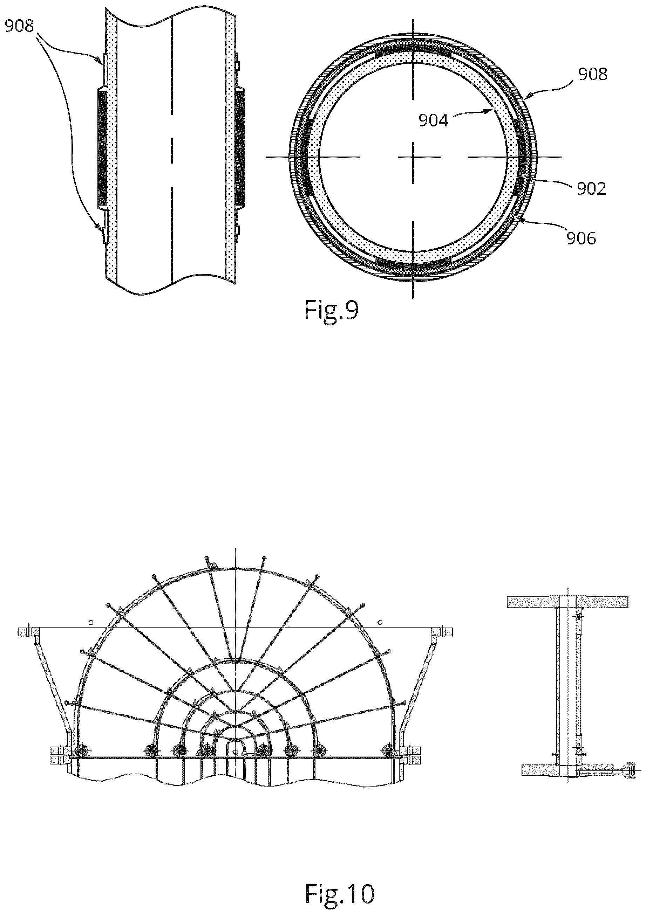

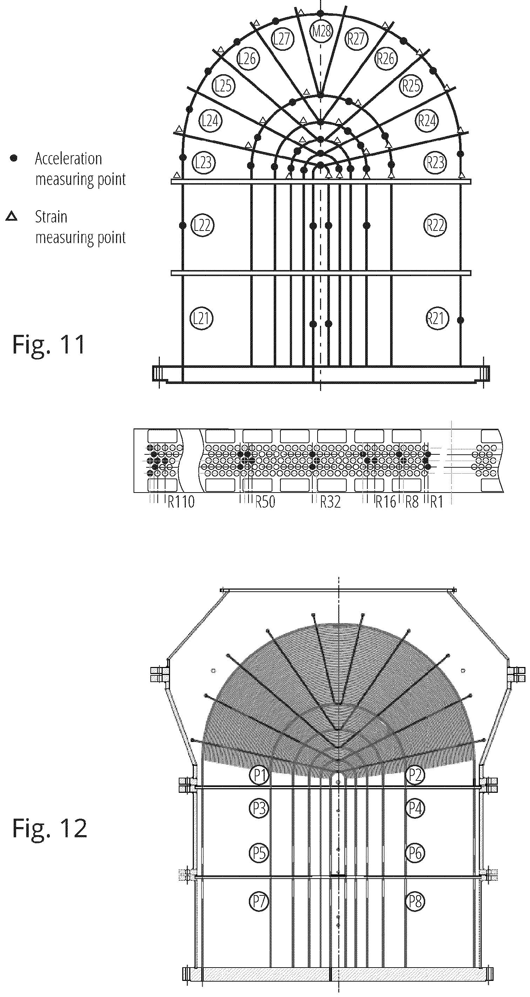

The pressure sensors include first pressure sensors and second pressure sensors. The first pressure sensor is arranged on an outer wall of a target heat transfer pipe in the plurality of non-linear heat transfer pipes and is configured to measure strain data of the plurality of non-linear heat transfer pipes. A distance between the target heat transfer pipe and the support assembly meets a preset distance condition. Specifically, the first pressure sensor on the heat transfer pipe is configured to measure vibration stress when the heat transfer pipe undergoes flow-induced vibration under different preset fluid flow parameters. Optionally, the first pressure sensor may be a strain gauge. As shown in FIG. 9 which is a schematic diagram of mounting of the first pressure sensor on the heat transfer pipe according to another embodiment, first pressure sensors 902 are affixed to a specified heat transfer pipe 904 that is 40 mm away from a support position of the anti-vibration bar or a position of the support plate 244, and are respectively affixed to four directions of the specified heat transfer pipe, which are directions of incoming flow and directions perpendicular to the directions of incoming flow. Then, the strain gauge is wrapped with a rubber sleeve 906 to prevent damage to the strain gauge due to vibration stress caused by direct washing of the strain gauge by the fluid. Two ends of the rubber sleeve 906 are fixed with metal rings 908. As shown in FIG. 10 which is a schematic diagram of wiring of the first pressure sensor on the heat transfer pipe according to another embodiment, after all the first pressure sensors are successfully mounted, according to a principle of proximity, the first pressure sensor is wired along an outer wall of the heat transfer pipe and exits from the flange at the first support plate 244. FIG. 11 is a schematic diagram of mounting positions of the first acceleration sensor and the first pressure sensor according to another embodiment.

The second pressure sensors are arranged on pressure measuring points outside the plurality of non-linear heat transfer pipes and are configured to measure pressure data of the fluid outside the plurality of non-linear heat transfer pipes. Specifically, the second pressure sensors on the test apparatus are configured to measure void fractions of the fluid outside the plurality of non-linear heat transfer pipes. As shown in FIG. 12 which is a schematic diagram of mounting of the second pressure sensor on the heat transfer pipe according to another embodiment, 4 pressure measuring points P1, P2, P9, and P 10 are arranged on a bending section of the non-linear heat transfer pipe, a straight section of the non-linear heat transfer pipe between the first support plate and the second support plate is provided with 4 pressure measuring points P3, P4, P5, and P6, and a straight section of the non-linear heat transfer pipe between the second support plate and the bottom plate 242 is provided with 2 pressure measuring points P7 and P8. After pressure data of P1, P2, P9, and P10 is obtained through the second pressure sensors, the pressure data of P1, P2, P9, and P10 is averaged, so as to obtain pressure data of the bending section of the non-linear heat transfer pipe and calculate void fractions of bending sections of the plurality of non-linear heat transfer pipes according to the pressure data of the bending section of the non-linear heat transfer pipe. Pressure data of P1 and P3 or pressure data of P2 and P4 is obtained through the second pressure sensor, so as to obtain pressure loss of the first support plate. Pressure data of P3 and P5 or pressure data of P4 and P6 is obtained through the second pressure sensor, so as to obtain pressure loss of the straight section of the non-linear heat transfer pipe. Pressure data of P5 and P7 or pressure data of P6 and P8 is obtained through the second pressure sensor, so as to obtain pressure loss of the second support plate.

The temperature sensor is arranged on an external outlet pipeline connected to the fluid outlet section 180 and is configured to measure temperature data of an entire test circuit. Specifically, the temperature sensor may more accurately monitor the temperature of the fluid, and may monitor whether the overall temperature of the test apparatus meets a preset threshold.

Flow detection sensors are arranged on the fluid inlet section 120 and the fluid mixing section 140 and are configured to detect a flow rate of the fluid inputted into the fluid inlet section and a flow rate of the fluid inputted into the fluid mixing section. Specifically, the flow detection sensors monitor a flow rate of the first fluid and a flow rate of the second fluid, so as to calculate void fractions at specified positions of the test apparatus according to collected pressure data measured by the second pressure sensor, flow rate data of the first fluid, and flow rate data of the second fluid.

In the embodiments of the present application, the acceleration sensors are arranged on the inner walls of the plurality of non-linear heat transfer pipes, on the housing of the flow channel groove, and on the test bench; the acceleration sensors are configured to measure the acceleration data of the plurality of non-linear heat transfer pipes and the test apparatus; the pressure sensors are arranged on the outer wall of the target heat transfer pipe in the plurality of non-linear heat transfer pipes and the pressure measuring points outside the plurality of non-linear heat transfer pipes and are configured to measure the pressure data of the plurality of non-linear heat transfer pipes and the fluid outside the plurality of non-linear heat transfer pipes; the temperature sensor is arranged on the external outlet pipeline connected to the fluid outlet section and is configured to measure the temperature data of the entire test circuit; and the flow detection sensors are arranged on the fluid inlet section and the fluid mixing section and are configured to detect the flow rate of the fluid inputted into the fluid inlet section and the flow rate of the fluid inputted into the fluid mixing section. Therefore, test data when the plurality of non-linear heat transfer pipes required by the collection device undergo flow-induced vibration is obtained, so as to verify flow-induced vibration behaviors under conditions of large flow rates and more accurately verify the safety margin when the heat transfer pipe in the large natural circulation heat exchanger undergoes flow-induced vibration. Accordingly, safe operation of the large natural circulation heat exchanger in actual manufacturing can be ensured.

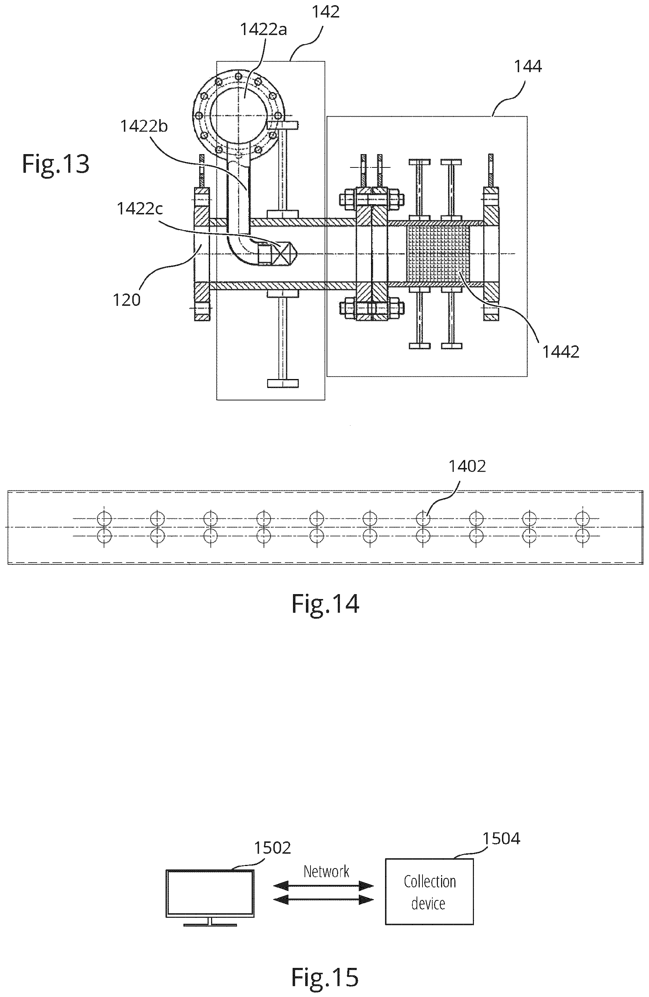

In an embodiment, as shown in FIG. 13 which is a schematic structural diagram of the fluid mixing section 140 of the flow-induced vibration test apparatus according to an embodiment, the fluid mixing section 140 of the flow-induced vibration test apparatus includes a first mixing section 142 and a second mixing section 144 connected in sequence; the first fluid flows through the fluid inlet section 120 into the first mixing section 142; the first mixing section 142 includes a second fluid inlet pipe 1422, and the second fluid passes through the second fluid inlet pipe into the first mixing section 142 and is mixed with the first fluid in the first mixing section 142 to generate an intermediate mixed fluid.

The second mixing section is provided with a packing layer 1442, and the intermediate mixed fluid flows from the first mixing section 142 into the second mixing section 144 and is mixed through the packing layer 1442 to generate the mixed fluid.

Specifically, there are two rows of water inlets at the top of a water inlet pipe of the fluid inlet section 120 for the first fluid to flow into the first mixing section 142 through a water inlet of the fluid inlet section 120. The first mixing section 142 includes a second fluid inlet pipe. The second fluid inlet pipe 1422 includes a main pipe 1422a, a branch pipe 1422b, and a nozzle pipe 1422c. The second fluid flows into the first mixing section 142 through the second fluid inlet pipe 1422, and is mixed with the first fluid in the first mixing section 142 to generate an intermediate mixed fluid. The second mixing section 144 is provided with a packing layer 1442. The packing layer 1442 may fully cut the first fluid and the second fluid to achieve uniform mixing and achieve a bubble flow manifold. The intermediate mixed fluid flows from the first mixing section 142 into the second mixing section 144 and is mixed through the packing layer 1442 to generate the mixed fluid.

In the embodiments of the present application, the fluid mixing section 140 includes a first mixing section 142 and a second mixing section 144 connected in sequence; the first fluid flows through the fluid inlet section 120 into the first mixing section 142; the first mixing section 142 includes a second fluid inlet pipe 1422, and the second fluid passes through the second fluid inlet pipe into the first mixing section 142 and is mixed with the first fluid in the first mixing section 142 to generate an intermediate mixed fluid; the second mixing section is provided with a packing layer 1442, and the intermediate mixed fluid flows from the first mixing section 142 into the second mixing section 144 and is mixed through the packing layer 1442 to generate the mixed fluid. The arrangement of the fluid mixing section 140 can achieve uniform mixing of fluids in the test section 160, thereby verifying the flow-induced vibration behavior under conditions of large flow rates and more accurately verifying the safety margin when the heat transfer pipe in the large natural circulation heat exchanger undergoes flow-induced vibration. Accordingly, safe operation of the large natural circulation heat exchanger in actual manufacturing can be ensured.

In an embodiment, the fluid inlet section 120 includes a first fluid inlet pipe, a fourth through hole, and a water baffle.

The first fluid flows into the test apparatus through the first fluid inlet pipe. The fourth through hole is provided at one end of the first fluid inlet pipe, and the first fluid flows into the first mixing section through the fourth through hole. The water baffle is arranged on one side of the fourth through hole to evenly distribute a flow rate of the first fluid.

Referring to FIG. 1, the fluid inlet section 120 includes a first fluid inlet pipe, a fourth through hole, and a water baffle. The first fluid flows into the fluid inlet section 120 through the first fluid inlet pipe. As shown in FIG. 14 which is a schematic structural diagram of fourth through holes 1402 in the fluid inlet section according to an embodiment, a top end of the first fluid inlet pipe is provided with two rows of fourth through holes 1402, and the first fluid flows into the fluid mixing section 140 through the fourth through hole 1402. The water baffle is arranged on a side of the first fluid inlet pipe provided with the fourth through hole. The water baffle includes a plurality of water blocking sheets. The plurality of water blocking sheets divide the first fluid into a plurality of first fluid channels. The first fluid can pass through the first fluid channel between the water blocking sheets to evenly distribute the flow rate of the first fluid. Then, the uniformly distributed first fluid flows into the fluid mixing section 140 through the first fluid channel.

In the embodiments of the present application, the fluid inlet section 120 includes a first fluid inlet pipe, a fourth through hole, and a water baffle. The first fluid flows into the test apparatus through the first fluid inlet pipe. The fourth through hole is provided at one end of the first fluid inlet pipe, and the first fluid flows into the first mixing section through the fourth through hole. The water baffle is arranged on one side of the fourth through hole to evenly distribute a flow rate of the first fluid. The arrangement of the first fluid inlet pipe, the fourth through hole, and the water baffle in the fluid inlet section 120 can achieve uniform distribution of the first fluid and prepare for subsequent full mixing of the first fluid and the second fluid, thereby more accurately verifying the flow-induced vibration behavior under conditions of large flow rates and more accurately verifying the safety margin when the heat transfer pipe in the large natural circulation heat exchanger undergoes flow-induced vibration. Accordingly, safe operation of the large natural circulation heat exchanger in actual manufacturing can be ensured.

In an embodiment, the test simulation body further includes a viewing window.

The viewing window is arranged on a housing of the test apparatus between the fluid mixing section and the test section and is configured to observe a mixing situation of the first fluid and the second fluid.

Referring to FIG. 1, the viewing window is arranged on the housing of the test apparatus between the fluid mixing section and the test section, which is specifically divided into a first viewing window, a second viewing window, and a third viewing window. 3 first viewing windows are provided, which are evenly distributed on the housing of the fluid mixing section under the bottom plate. A mixing effect of the mixed fluid may be observed through the first viewing windows, which serves as a benchmark for observing a mixing effect of the mixed fluid in the test section. 5 second viewing windows are provided, which are evenly distributed on the housing of the test section under the second support plate. Through the second viewing windows, a mixing effect of the mixed fluid in regions outside the straight sections of the plurality of non-linear heat transfer pipes can be more comprehensively observed, which reduces blind regions compared with the first viewing windows. 5 third viewing windows are provided, which are evenly distributed in an arc shape on the housing of the bending sections of the plurality of non-linear heat transfer pipes. Through the third viewing windows, the mixing effect of the mixed fluid in regions outside the bending sections of the plurality of non-linear heat transfer pipes can be observed.

In the embodiments of the present application, the viewing window is arranged on the housing of the test apparatus between the fluid mixing section and the test section and is configured to observe a mixing situation of the first fluid and the second fluid. Through the arrangement of the viewing window, the mixing effect of the mixed fluid and vibration of the plurality of non-linear heat transfer pipes can be observed through a high-speed camera outside the flow-induced vibration test apparatus, so as to more accurately verify flow-induced vibration behaviors under conditions of large flow rates and more accurately verify the safety margin when the heat transfer pipe in the large natural circulation heat exchanger undergoes flow-induced vibration. Accordingly, safe operation of the large natural circulation heat exchanger in actual manufacturing can be ensured.

In an embodiment, the support plate 244 of the flow-induced vibration test apparatus includes a first support plate and a second support plate.

The first support plate and the second support plate are arranged in sequence in the test section 160, and the first support plate and the second support plate are both arranged on the straight sections of the plurality of non-linear heat transfer pipes.

Referring to FIG. 1, the first support plate and the second support plate are arranged in sequence in the test section 160, and the first support plate and the second support plate are both arranged on the straight sections of the plurality of non-linear heat transfer pipes. The second support plate is arranged between the first support plate and the bottom plate 242.

In the embodiments of the present application, the support plate 244 includes a first support plate and a second support plate, and the first support plate and the second support plate are both arranged on the straight sections of the plurality of non-linear heat transfer pipes. The arrangement of the first support plate and the second support plate strengthens the support structure of the straight sections of the plurality of non-linear heat transfer pipes, which enables the flow-induced vibration test apparatus to more accurately simulate the flow-induced vibration behavior of the heat transfer pipe in the tube bundle region of the large natural circulation heat exchanger in actual manufacturing, thereby more accurately verifying the safety margin when the heat transfer pipe in the large natural circulation heat exchanger undergoes flow-induced vibration. Accordingly, safe operation of the large natural circulation heat exchanger in actual manufacturing can be ensured.

In an embodiment, the non-linear heat transfer pipes of the flow-induced vibration test apparatus include any one of U-shaped heat transfer pipes and spiral heat transfer pipes. The non-linear heat transfer pipes include straight sections and bending sections.

In the embodiments of the present application, the non-linear heat transfer pipes include any one of U-shaped heat transfer pipes and spiral heat transfer pipes, the flow-induced vibration test apparatus in the present application is designed using a plurality of non-linear heat transfer pipes with similar complexity to the actual, and the plurality of non-linear heat transfer pipes can more accurately simulate the structure of the non-linear heat transfer pipe in the tube bundle region of the large natural circulation heat exchanger in actual manufacturing, thereby more accurately simulating flow-induced vibration of the fluid in actual manufacturing and more accurately verifying the safety margin when the heat transfer pipe in the large natural circulation heat exchanger undergoes flow-induced vibration. Accordingly, safe operation of the large natural circulation heat exchanger in actual manufacturing can be ensured.

A flow-induced vibration test simulation method provided in the embodiments of the present application is applicable to an application environment as shown in FIG. 15. A computer device 1502 communicates with a collection device 1504 over a network. The computer device 1502 may store data required to be processed by the collection device 1504. The mixed fluid is controlled to flow into the test section 160 according to preset fluid flow parameters. The preset fluid flow parameters include a fluid flow velocity parameter and a fluid void fraction parameter. When the mixed fluid flows into the test section 160, test data when the flow-induced vibration test apparatus undergoes flow-induced vibration is collected through the collection device. The test data includes at least one of acceleration data, strain data, pressure data, temperature data, and flow rate data. The preset fluid flow parameters and the test data corresponding to the preset fluid flow parameters are analyzed to determine vibration features when the plurality of non-linear heat transfer pipes undergo flow-induced vibration. The computer device 1502 may include, but is not limited to, various personal computers, notebook computers, smartphones, tablet computers, Internet of Things devices, and portable wearable devices. The Internet of Things devices may be smart speakers, smart TVs, smart air conditioners, smart vehicle-mounted devices, or the like. The portable wearable devices may be smart watches, smart bracelets, head-mounted devices, or the like. The collection device 1504 may be implemented with an independent server or a server cluster including a plurality of servers.

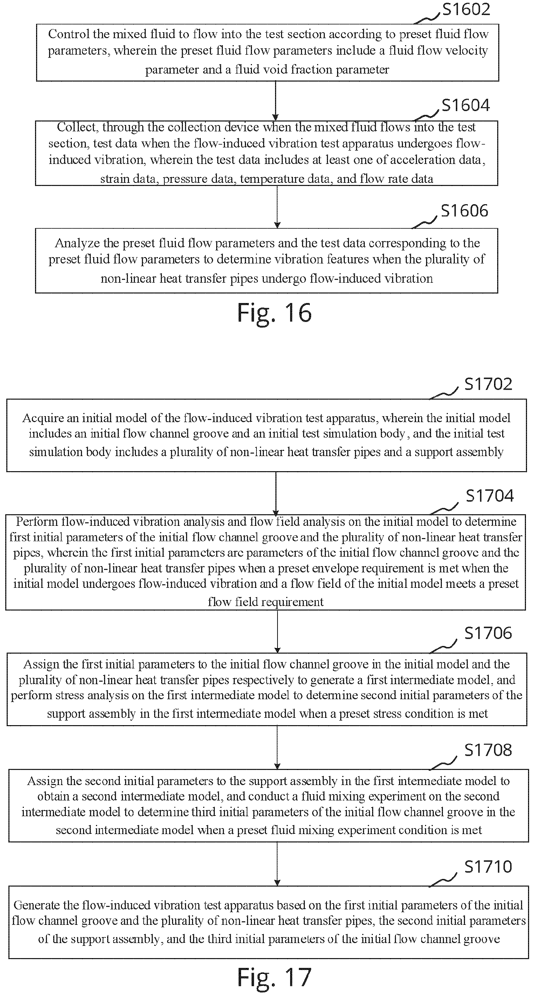

In an embodiment, as shown in FIG. 16, a flow-induced vibration test simulation method is provided, applied to the above flow-induced vibration test apparatus. For example, the method is applied to the computer device 1502 in FIG. 15, including the following operations.

In operation 1602, the mixed fluid is controlled to flow into the test section 160 according to preset fluid flow parameters, wherein the preset fluid flow parameters include a fluid flow velocity parameter and a fluid void fraction parameter.

The fluid flow velocity parameter is a flow velocity of the fluid. The fluid void fraction parameter is a void fraction, which represents a percentage of gas in a gas-liquid two-phase mixture. The parameter directly affects heat and mass transfer characteristics of a two-phase flow, which is an important parameter that affects operation and performance of a two-phase flow system, and real-time measurement thereof is of great significance.

Specifically, the computer device 1502 controls the mixed fluid to flow into the test section 160 according to the preset fluid flow parameters. In the flow-induced vibration test simulation method of the present application, the preset fluid flow parameters include a fluid flow velocity parameter and a fluid void fraction parameter. Two test conditions are mainly classified. The first one is to change the fluid void fraction parameter while the fluid flow velocity parameter is controlled unchanged. The second one is to change the fluid flow velocity parameter while the fluid void fraction parameter is controlled unchanged.

In operation 1604, when the mixed fluid flows into the test section 160, test data when the flow-induced vibration test apparatus undergoes flow-induced vibration is collected through the collection device, wherein the test data includes at least one of acceleration data, strain data, pressure data, temperature data, and flow rate data.

Specifically, when the mixed fluid flows into the test section 160, that is, when the plurality of non-linear heat transfer pipes undergo flow-induced vibration, test data when the plurality of non-linear heat transfer pipes undergo flow-induced vibration is collected through the collection device 1504. The collection device 1504 includes an acceleration sensor, a pressure sensor, a temperature sensor, and a flow detection sensor, which specifically collect vibration characteristics, damping ratios, and additional mass coefficients of the plurality of non-linear heat transfer pipes; vibration acceleration and displacement response values of straight sections and bending sections of the plurality of non-linear heat transfer pipes under a same void and different flow velocities and under a same flow velocity and different voids; and vibration strain values of the plurality of non-linear heat transfer pipes of the bending sections of the plurality of non-linear heat transfer pipes under a same void and different flow velocities and under a same flow velocity and different voids.

In operation 1606, the preset fluid flow parameters and the test data corresponding to the preset fluid flow parameters are analyzed to determine vibration features when the plurality of non-linear heat transfer pipes undergo flow-induced vibration.

Specifically, the computer device 1502 analyzes the preset fluid flow parameters and the test data corresponding to the preset fluid flow parameters, and if no vortex shedding resonance and fluidelastic instability and no abnormal vibration are found within a test flow velocity range and the test data when the flow-induced vibration test apparatus undergoes flow-induced vibration collected by the collection device 1504, including vibration characteristics of the plurality of non-linear heat transfer pipes and vibration acceleration values, strain values, and displacement values under different operating conditions, meets a requirement of a flow-induced vibration safety margin of the flow-induced vibration test apparatus for the test data, the safety margin when the heat transfer pipe in the large natural circulation heat exchanger undergoes flow-induced vibration can be more accurately verified.

In the above flow-induced vibration test simulation method, the mixed fluid is controlled to flow into the test section 160 according to preset fluid flow parameters; the preset fluid flow parameters include a fluid flow velocity parameter and a fluid void fraction parameter; when the mixed fluid flows into the test section 160, test data when the flow-induced vibration test apparatus undergoes flow-induced vibration is collected through the collection device; the test data includes at least one of acceleration data, strain data, pressure data, temperature data, and flow rate data; and the preset fluid flow parameters and the test data corresponding to the preset fluid flow parameters are analyzed to determine vibration features when the plurality of non-linear heat transfer pipes undergo flow-induced vibration. According to the flow-induced vibration test simulation method in the present application, when the plurality of non-linear heat transfer pipes undergo flow-induced vibration, the test data when the flow-induced vibration test apparatus undergoes flow-induced vibration is collected through the collection device, and the obtained test data is analyzed. Through this process, the flow-induced vibration behavior of the heat transfer pipe in the tube bundle region of the large natural circulation heat exchanger in actual manufacturing can be more accurately simulated, thereby more accurately verifying the safety margin when the heat transfer pipe in the large natural circulation heat exchanger undergoes flow-induced vibration. Accordingly, safe operation of the large natural circulation heat exchanger in actual manufacturing can be ensured.

In an embodiment, as shown in FIG. 17, a flow-induced vibration test apparatus design method is provided, applied to the above flow-induced vibration test apparatus, and including the following operations.

In operation 1702, an initial model of the flow-induced vibration test apparatus is acquired, wherein the initial model includes an initial flow channel groove and an initial test simulation body, and the initial test simulation body includes a plurality of non-linear heat transfer pipes and a support assembly.

Specifically, modal analysis on the heat transfer pipe in the flow-induced vibration test apparatus is carried out to keep the vibration characteristics of the bending section of the heat transfer pipe in the flow-induced vibration test apparatus similar to the vibration characteristics of the bending section of the heat transfer pipe in the actual product. Specifically, vibration frequencies and vibration modes of the test apparatus and the bending section of the product are kept similar. Therefore, a decoupling criterion of the bending section and the straight section of the heat transfer pipe is determined, that is, if the straight section of the heat transfer pipe is two-span, an overall influence of the straight section on dynamic characteristics of the bending section can be eliminated, and then a scale of the heat transfer pipe in the test apparatus is a two-span straight section and an entire bending section, thereby determining a size of the heat transfer pipe in the flow-induced vibration test apparatus, to obtain the initial model of the flow-induced vibration test apparatus.

In operation 1704, flow-induced vibration analysis and flow field analysis are performed on the initial model to determine first initial parameters of the initial flow channel groove and the plurality of non-linear heat transfer pipes, wherein the first initial parameters are parameters of the initial flow channel groove and the plurality of non-linear heat transfer pipes when a preset envelope requirement is met when the initial model undergoes flow-induced vibration and a flow field of the initial model meets a preset flow field requirement.

Specifically, firstly, flow-induced vibration pre-analysis is performed on the initial model. First of all, a mass flow rate and a void fraction interval of a bending region of the tube bundle under a steady-state operating condition of the actual product and a size of a heat transfer pipe in a preset flow-induced vibration test apparatus are verified according to preset requirements, and an operating condition for envelope performance of the flow-induced vibration test apparatus is calculated.

Then, fluidelastic instability analysis is carried out on the heat transfer pipe in the preset flow-induced vibration test apparatus according to the calculated operating condition, to obtain a fluidelastic instability rate of the heat transfer pipe with a maximum bending radius in the preset flow-induced vibration test apparatus. A principle of a requirement for a test operating condition is determined according to a principle of a maximum fluidelastic instability rate of a heat transfer pipe with a maximum bending radius in an envelope product.

Next, turbulent buffeting analysis is carried out on the heat transfer pipe in the preset flow-induced vibration test apparatus to obtain a root mean square effective value of a turbulent buffeting response of the heat transfer pipe, which is compared with a turbulent buffeting response in the actual product. According to a requirement of a vibration response of the preset flow-induced vibration test apparatus for a vibration response of the envelope product, a principle of meeting a requirement of a flow-induced vibration test condition for a flow-induced vibration test operating condition is obtained.

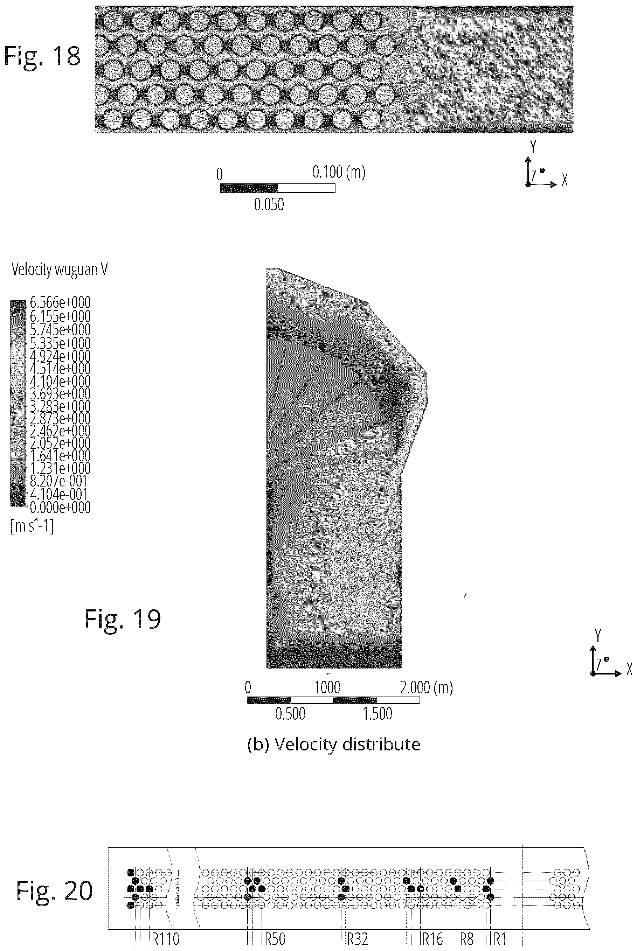

Secondly, flow field pre-analysis is performed on the initial model to determine a scale of a tube array, a size of a flow channel in the test section, and pressure loss of the test apparatus. First of all, the scale of the tube array and a thickness of the flow channel in the test section in the design of the preset flow-induced vibration test apparatus are selected through flow field pre-analysis. As shown in FIG. 18 which is a schematic diagram of a scale of a tube array in flow field pre-analysis, through flow field pre-analysis, the scale of the tube array to eliminate an influence of a boundary condition is determined to be five rows of heat transfer pipes, and a thickness of the test section of the flow-induced vibration test apparatus is determined to be 112 mm. Then, the flow-induced vibration test operating condition is obtained according to the size of the flow channel and a flow-induced vibration pre-analysis result in combination with a flow rate control capability of the test bench and a performance parameter requirement for the test apparatus. Next, pressure loss of the preset flow-induced vibration test apparatus is calculated to obtain operating pressure of the preset flow-induced vibration test apparatus, matching design is performed based on the operating pressure and the test circuit, and segmented pressure drop of each section of the test apparatus is determined.

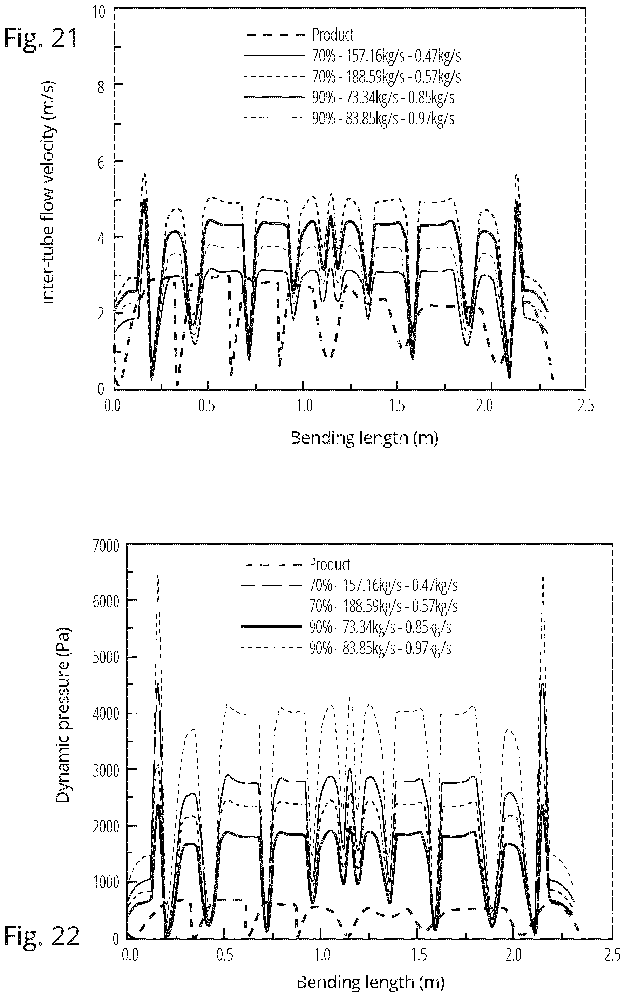

Thirdly, flow field analysis is performed on the initial model. First of all, as shown in FIG. 19 which is a schematic diagram of inter-tube flow velocity distribution of the heat transfer pipe in the test section, through flow field analysis on the inter-tube flow velocity distribution of the heat transfer pipe in the test section, an inter-tube flow velocity of the target heat transfer pipe is obtained according to flow conservation and conversion, which provides input for subsequent flow-induced vibration analysis of the heat transfer pipe. Then, as shown in FIG. 20 which is a schematic diagram of a position of the heat transfer pipe required to be measured in a high flow velocity region, the position of the heat transfer pipe required to be measured in the high flow velocity region is preliminarily determined through flow velocity distribution. Next, inter-tube flow velocity distribution of a heat transfer pipe at a key position selected from the preset flow-induced vibration test apparatus is compared with that of the heat transfer pipe at a same position. FIG. 21 shows comparisons between inter-tube flow velocities under certain test conditions on a certain heat transfer pipe and steady-state operation of the actual product; and FIG. 22 shows comparisons between fluid dynamic pressure under certain test conditions on a certain heat transfer pipe and steady-state operation of the actual product. As can be seen from FIG. 21 and FIG. 22 that a fluid action speed and dynamic pressure on the heat transfer pipe in the preset flow-induced vibration test apparatus can well envelope the heat transfer pipe at the same position of the product. Moreover, fluid excitation of the heat transfer pipe is positively correlated with an inter-tube flow velocity and dynamic pressure, and a flow-induced vibration response is positively correlated with the fluid excitation, thereby verifying that the flow field of the preset flow-induced vibration test apparatus is capable of enveloping the actual product in terms of flow-induced vibration.

Fourthly, flow-induced vibration analysis is performed on the initial model. First of all, based on the inter-tube flow velocity of the heat transfer pipe of the test apparatus obtained through flow field analysis, envelope performance of the actual product in terms of the flow-induced vibration response of the heat transfer pipe is verified. By comparing the vibration responses of the heat transfer pipe of the preset flow-induced vibration test apparatus and the heat transfer pipe of the actual product, it may be obtained that the flow-induced vibration response of the heat transfer pipe of the preset flow-induced vibration test apparatus under a typical operating condition can well envelope the vibration response of the heat transfer pipe at the same position in the actual product. Next, a measuring point position is selected according to flow field analysis and flow-induced vibration analysis results of the preset flow-induced vibration test apparatus in combination with structural characteristics of the heat transfer pipe in the preset flow-induced vibration test apparatus. The measuring point position is required to follow the following principles: 1) the position is in a high transverse inter-tube flow velocity region and a high hydrodynamic pressure region; 2) the position is at a position with a large turbulent excitation vibration response effective value; 3) the position is at a position with greater vibration stress; 4) the position is at a critical position supported by the anti-vibration bar: a maximum unsupported span position; 5) symmetry is taken into account; 6) a certain degree of redundancy is taken into account; and 7) installability of a strain gauge and an accelerometer are taken into account. Based on the above principles, positions of acceleration and strain measurement points when a flow-induced vibration test is conducted are determined, thereby determining the first initial parameters of the initial flow channel groove and the plurality of non-linear heat transfer pipes when a preset envelope requirement is met when the initial model undergoes flow-induced vibration and the flow field of the initial model meets a preset flow field requirement.

In operation 1706, the first initial parameters are assigned to the initial flow channel groove in the initial model and the plurality of non-linear heat transfer pipes respectively to generate a first intermediate model, and stress analysis is performed on the first intermediate model to determine second initial parameters of the support assembly in the first intermediate model when a preset stress condition is met.

Specifically, the first initial parameters are assigned to the initial flow channel groove in the initial model and the plurality of non-linear heat transfer pipes respectively to generate the first intermediate model, and based on the segmented pressure drop and in consideration of a safety factor of 1.5 times, the first intermediate model is divided into three parts to perform stress analysis on the first intermediate model. The first part includes the fluid inlet section and the fluid mixing section; the second part includes the straight section and the test section; and the third part includes the bending section, the test section, and the fluid outlet section. According to stress analysis, the second initial parameters of the support assembly in the first intermediate model when the preset stress condition is met are determined, to ensure that maximum deformation of the preset flow-induced vibration test apparatus meets a preset requirement.

In operation 1708, the second initial parameters are assigned to the support assembly in the first intermediate model to obtain a second intermediate model, and a fluid mixing experiment is conducted on the second intermediate model to determine third initial parameters of the initial flow channel groove in the second intermediate model when a preset fluid mixing experiment condition is met.

Specifically, the second initial parameters are assigned to the support assembly in the first intermediate model to obtain the second intermediate model. In order to fully mix the first fluid and the second fluid before the test section and ensure that the mixed fluid in the entire test section is approximately in a shape of bubble flow during the test, there is a need to develop a fluid mixing apparatus that meets the preset requirement and has a structural interface compatible with the body of the preset flow-induced vibration test apparatus and conduct the fluid mixing experiment on the second intermediate model. First of all, according to an operating condition flow rate of the test section of the test apparatus and a structural size of an inlet position of the fluid mixing section, a flow rate at the inlet of the fluid mixing section is calculated, thereby ensuring that a fluid mixing module meets a performance requirement for fluid mixing within an inlet flow rate range of the fluid mixing section. Then, overall pressure loss of the fluid mixing module is calculated based on the capability of the test bench, including pressure loss of a nozzle pipe, pressure loss of a spray head, and pressure loss of a blending section packing layer. A structure of the fluid mixing module that meets a pressure loss requirement of the test bench is determined by calculating and optimizing pressure loss of a mixer and performing iteration several times.

Next, the determined structure of the fluid mixing module is shown in FIG. 13. The second fluid inlet pipe 1422 includes a main pipe 1422a, a branch pipe 1422b, and a nozzle pipe 1422c. An interface at a tail end of the branch pipe may be connected to the nozzle pipe to achieve preliminary mixing of gas and water under a low void operating condition, and the tail end of the branch pipe may alternatively be connected to the spray head to achieve preliminary mixing of gas and water under a high void operating condition. Under the low void operating condition, the first fluid inlet is connected to a water circuit of the test circuit, and the second fluid inlet is connected to a gas circuit. Under the high void operating condition, the first fluid inlet is connected to the gas circuit, and the second fluid inlet is connected to the water circuit. The second mixing section is connected to the first mixing section through a flange, and a corrugated plate packing layer is provided inside the second mixing section to achieve full mixing of the mixed fluid.

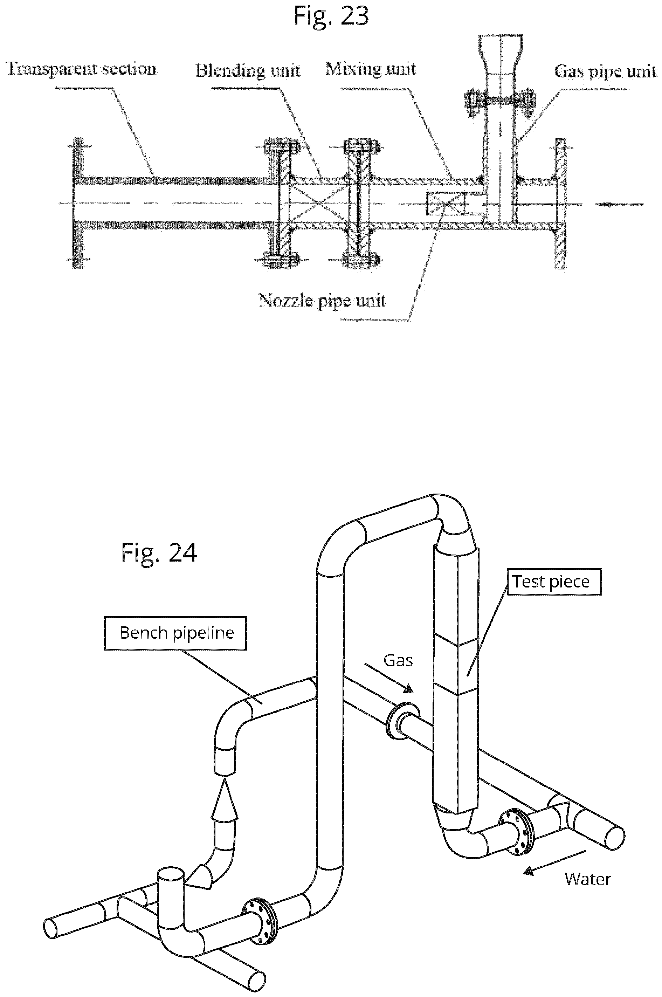

Next, due to complexity of two-phase flow, it is difficult to establish or select a corresponding mathematical and physical model of two-phase mixed flow by using theoretical methods such as computational fluid dynamics. Therefore, after completion of the design of the structure of the fluid mixing module, there is a need to test the fluid mixing module to observe effects of fluid mixing under different operating conditions, which may provide a reference for subsequent testing of the entire flow-induced vibration test apparatus. Design principles of a performance test apparatus of the fluid mixing module are as follows: 1) a flow velocity flowing through a mixing apparatus performance test simulation body is consistent with that of the flow-induced vibration test apparatus; 2) a perforation flow velocity of the nozzle pipe is consistent with that of the flow-induced vibration test apparatus; 3) maximum and minimum values of a void fraction cover an operating condition parameter range of the flow-induced vibration test apparatus; and 4) an arrangement form is consistent with that of the test apparatus. FIG. 23 is a schematic structural diagram of a fluid mixing module performance test simulation body designed according to the above design principles. FIG. 24 is a schematic structural diagram of mounting of the fluid mixing module performance test simulation body in the test circuit.

Then, according to a requirement for the test operating condition of the flow-induced vibration test apparatus, the fluid mixing experiment is carried out according to the principle that apparent velocities of gas and water are the same based on structural characteristics of the fluid mixing module performance test simulation body, and a test operating condition of a performance test is determined. A mixing effect of a downstream transparent section of a blending unit is captured by a high-speed camera during the fluid mixing experiment, a water flow rate and an air flow rate are measured respectively using an electromagnetic flowmeter and an air flowmeter, and pressure and a pressure difference of the test simulation body and the test circuit are measured.

Finally, acquired test results are mainly gas-water mixing video data captured by the high-speed camera and the pressure difference of the simulation body measured by a pressure difference measuring point. Through the obtained video comparisons and pressure difference analysis, the following conclusions are drawn: 1) under an operating condition of a low flow rate and a low void rate, bubbles tend to aggregate into large bubbles, but basically break into small bubbles again at a tail end of the transparent section; 2) there is no obvious difference in mixing effects of gas pipes with different openings under an operating condition of a high flow rate; 3) under an operating condition of a low flow rate, a mixing effect of an 80-hole gas pipe is slightly better than that of a 400-hole gas pipe; 4) under an operating condition of a low air flow rate, not all openings of the 400-hole gas pipe have air flow, only the top two rows of holes have air flow; and 5) in the case of a large air volume, air resistance of the 80-hole gas pipe is greater than that of the 400-hole gas pipe. Through the analysis of the above conclusions, it is concluded that the designed fluid mixing module is featured with a good mixing effect and low resistance, and can meet test requirements, and a number of openings of the nozzle pipe on the fluid-induced vibration test apparatus is determined, thereby determining the third initial parameter of the initial flow channel groove in the second intermediate model when the preset fluid mixing experiment condition is met.

In operation 1710, the flow-induced vibration test apparatus is generated based on the first initial parameters of the initial flow channel groove and the plurality of non-linear heat transfer pipes, the second initial parameters of the support assembly, and the third initial parameters of the initial flow channel groove.

Specifically, the flow-induced vibration test apparatus is generated based on the first initial parameters of the initial flow channel groove and the plurality of non-linear heat transfer pipes, the second initial parameters of the support assembly, and the third initial parameters of the initial flow channel groove that are obtained through the above flow-induced vibration analysis, flow field analysis, stress analysis, and fluid mixing experiment, thereby completing the design of the flow-induced vibration test apparatus.

In the above flow-induced vibration design method, an initial model of the flow-induced vibration test apparatus is acquired, wherein the initial model includes an initial flow channel groove and an initial test simulation body, and the initial test simulation body includes a plurality of non-linear heat transfer pipes and a support assembly; flow-induced vibration analysis and flow field analysis are performed on the initial model to determine first initial parameters of the initial flow channel groove and the plurality of non-linear heat transfer pipes, wherein the first initial parameters are parameters of the initial flow channel groove and the plurality of non-linear heat transfer pipes when a preset envelope requirement is met when the initial model undergoes flow-induced vibration and a flow field of the initial model meets a preset flow field requirement; the first initial parameters are assigned to the initial flow channel groove in the initial model and the plurality of non-linear heat transfer pipes respectively to generate a first intermediate model, and stress analysis is performed on the first intermediate model to determine second initial parameters of the support assembly in the first intermediate model when a preset stress condition is met; the second initial parameters are assigned to the support assembly in the first intermediate model to obtain a second intermediate model, and a fluid mixing experiment is conducted on the second intermediate model to determine third initial parameters of the initial flow channel groove in the second intermediate model when a preset fluid mixing experiment condition is met; and the flow-induced vibration test apparatus is generated based on the first initial parameters of the initial flow channel groove and the plurality of non-linear heat transfer pipes, the second initial parameters of the support assembly, and the third initial parameters of the initial flow channel groove. The flow-induced vibration test apparatus in the present application is obtained through flow-induced vibration analysis, flow field analysis, stress analysis, and the fluid mixing experiment, and then the designed flow-induced vibration test apparatus is used, which can more accurately simulate the flow-induced vibration behavior of the heat transfer pipe in the tube bundle region of the large natural circulation heat exchanger in actual manufacturing, thereby more accurately verifying the safety margin when the heat transfer pipe in the large natural circulation heat exchanger undergoes flow-induced vibration. Accordingly, safe operation of the large natural circulation heat exchanger in actual manufacturing can be ensured.

It should be understood that, although the operations in the flowcharts involved in the embodiments above are shown in sequence as indicated by the arrows, the operations are not necessarily performed in the order indicated by the arrows. Unless otherwise clearly specified herein, the operations are performed without any strict sequence limitation, and may be performed in other orders. In addition, at least some operations involved in the embodiments above may include a plurality of operations or a plurality of stages, and such operations or stages are not necessarily performed at a same moment, and may be performed at different moments. The operations or stages are not necessarily performed in sequence, and the operations or stages and at least some of other operations or operations or stages of other operations may be performed repeatedly or alternately.

Based on a same inventive concept, the embodiments of the present application further provide a flow-induced vibration test simulation apparatus configured to implement the flow-induced vibration test simulation method as described above. The implementation solution for solving the problem provided by the apparatus is similar to the implementation solution described in the above method, so specific limitations in the embodiments of one or more flow-induced vibration test simulation apparatuses provided below may be obtained with reference to in the above limitations on flow-induced vibration test simulation methods, which are not described in detail herein.

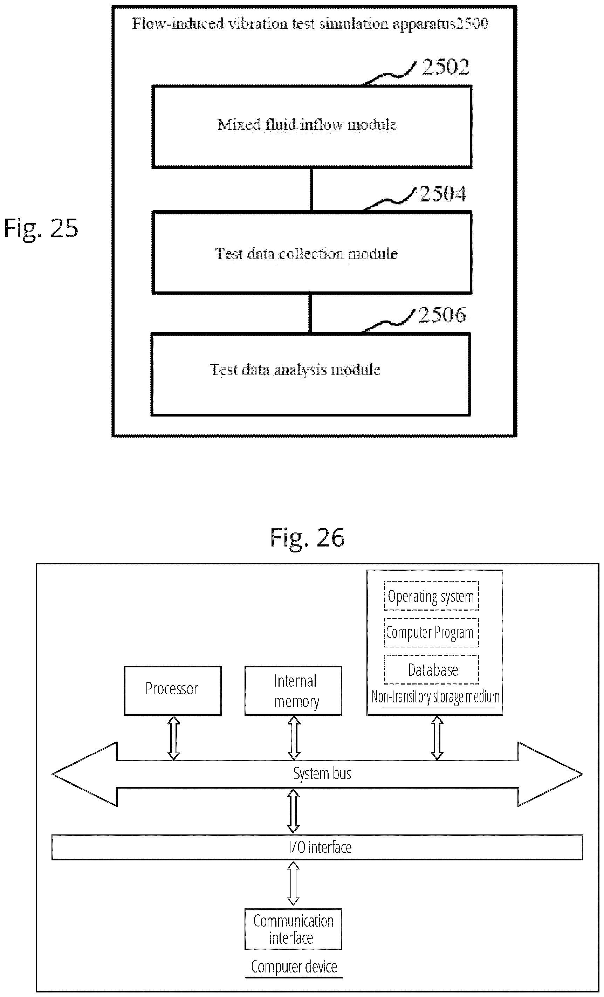

In an embodiment, as shown in FIG. 25, a flow-induced vibration test simulation apparatus 2500 is provided, including a mixed fluid inflow module 2502, a test data collection module 2504, and a test data analysis module 2506.

The mixed fluid inflow module 2502 is configured to control the mixed fluid to flow into the test section 160 according to preset fluid flow parameters. The preset fluid flow parameters include a fluid flow velocity parameter and a fluid void fraction parameter.

The test data collection module 2504 is configured to collect, through a collection device when the mixed fluid flows into the test section 160, test data when a flow-induced vibration test apparatus undergoes flow-induced vibration. The test data include at least one of acceleration data, strain data, pressure data, temperature data, and flow rate data.

The test data analysis module 2506 is configured to analyze the preset fluid flow parameters and the test data corresponding to the preset fluid flow parameters to determine vibration features when a plurality of non-linear heat transfer pipes undergo flow-induced vibration.

The modules in the above flow-induced vibration test apparatus may be implemented entirely or partially by software, hardware, or a combination thereof. The above modules may be built in or independent of a processor of a computer device in a hardware form, or may be stored in a memory of the computer device in a software form, so that the processor invokes and performs operations corresponding to the above modules.

In an embodiment, a computer device is provided. The computer device may be a server or a terminal. A diagram of an internal structure thereof may be shown in FIG. 26. The computer device includes a processor, a memory, and a network interface that are connected by using a system bus. The processor of the computer device is configured to provide computing and control capabilities. The memory of the computer device includes a non-transitory storage medium and an internal memory. The non-transitory storage medium stores an operating system, a computer program, and a database. The internal memory provides an environment for running of the operating system and the computer program in the non-transitory storage medium. The database of the computer device is configured to store flow-induced vibration test data. The network interface of the computer device is configured to communicate with an external terminal through a network connection. The computer program is executed by the processor to implement a flow-induced vibration test simulation method.

Those skilled in the art may understand that, in the structure shown in FIG. 26, only a block diagram of a partial structure related to a solution of the present application is shown, which does not constitute a limitation on the computer device to which the solution of the present application is applied. Specifically, the computer device may include more or fewer components than those shown in the figure, or some components may be combined, or a different component deployment may be used.

In an embodiment, a computer device is provided, including a memory and a processor. The memory stores a computer program. The processor, when executing the computer program, implements the following operations:
controlling the mixed fluid to flow into the test section 160 according to preset fluid flow parameters, wherein the preset fluid flow parameters include a fluid flow velocity parameter and a fluid void fraction parameter;
collecting, through the collection device upon the mixed fluid flows into the test section 160, test data when the flow-induced vibration test apparatus undergoes flow-induced vibration, wherein the test data includes at least one of acceleration data, strain data, pressure data, temperature data, and flow rate data; and
analyzing the preset fluid flow parameters and the test data corresponding to the preset fluid flow parameters to determine vibration features when the plurality of non-linear heat transfer pipes undergo flow-induced vibration.

In an embodiment, a computer-readable storage medium is provided, having a computer program stored therein, wherein when the computer program is executed by a processor, the following operations are implemented:
controlling the mixed fluid to flow into the test section 160 according to preset fluid flow parameters, wherein the preset fluid flow parameters include a fluid flow velocity parameter and a fluid void fraction parameter;
collecting, when the mixed fluid flows into the test section 160, test data when the flow-induced vibration test apparatus undergoes flow-induced vibration through the collection device, wherein the test data includes at least one of acceleration data, strain data, pressure data, temperature data, and flow rate data; and
analyzing the preset fluid flow parameters and the test data corresponding to the preset fluid flow parameters to determine vibration features when the plurality of non-linear heat transfer pipes undergo flow-induced vibration.

In an embodiment, a computer program product is provided, including a computer program, wherein when the computer program is executed by a processor, the following operations are implemented:
controlling the mixed fluid to flow into the test section 160 according to preset fluid flow parameters, wherein the preset fluid flow parameters include a fluid flow velocity parameter and a fluid void fraction parameter;
collecting, when the mixed fluid flows into the test section 160, test data when the flow-induced vibration test apparatus undergoes flow-induced vibration through the collection device, wherein the test data includes at least one of acceleration data, strain data, pressure data, temperature data, and flow rate data; and
analyzing the preset fluid flow parameters and the test data corresponding to the preset fluid flow parameters to determine vibration features when the plurality of non-linear heat transfer pipes undergo flow-induced vibration.

It is to be noted that user information (including, but not limited, to user equipment information, user personal information, and the like) and data (including, but not limited to, data for analysis, stored data, displayed data, and the like) involved in the present application are all authorized by the user or information and data fully authorized by all parties, and collection, use and processing of relevant data are required to comply with relevant laws, regulations, and standards of relevant countries and regions.

Those of ordinary skill in the art may understand that all or some of procedures of the method in the foregoing embodiments may be implemented by a computer program instructing relevant hardware. The computer program may be stored in a non-transitory computer-readable storage medium. When the computer program is executed, the procedures of the foregoing method embodiments may be implemented. Any reference to a memory, storage, a database, or another medium used in the embodiments provided the present application may include at least one of a non-transitory memory and a transitory memory. The non-transitory memory may include a read-only memory (ROM), a magnetic tape, a floppy disk, a flash memory, an optical memory, a high-density embedded non-transitory memory, a resistive random access memory (ReRAM), a magnetoresistive random access memory (MRAM), a ferroelectric random access memory (FRAM), a phase change memory (PCM), a graphene memory, and the like. The transitory memory may include a random access memory (RAM) or an external cache. By way of description and not limitation, the RAM may be in various forms, such as a static random access memory (SRAM), a dynamic random access memory (DRAM), or the like. The database as referred to in the embodiments provided in the present application may include at least one of a relational database and a non-relational database. The non-relational database may include a blockchain-based distributed database, but is not limited thereto. The processor as referred to in the embodiments provided in the present application may be a general-purpose processor, a central processing unit, a graphics processor, a digital signal processor, a programmable logic device, a data processing logic device based on quantum computing, or the like, but is not limited thereto.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the specification.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be defined by the appended claims.

## Claims

1. A flow-induced vibration test apparatus, wherein the apparatus comprises: a flow channel groove, a test simulation body, and a collection device; wherein
the flow channel groove comprises a fluid inlet section, a fluid mixing section, a test section, and a fluid outlet section connected in sequence; wherein the fluid mixing section is configured to mix the fluid flowing in from the fluid inlet section to generate a mixed fluid; wherein the mixed fluid flows through the test section and flows out from the fluid outlet section;
the test simulation body comprises a plurality of non-linear heat transfer pipes and a support assembly, wherein the support assembly is configured to fixedly mount the plurality of non-linear heat transfer pipes in the test section;
the collection device is provided on the plurality of non-linear heat transfer pipes, and is configured to collect test data when the plurality of non-linear heat transfer pipes undergo flow-induced vibration upon the mixed fluid flows into the test section.

2. The apparatus according to claim 1, wherein the support assembly comprises a bottom plate;
wherein the bottom plate is connected to a housing of the test section; the bottom plate is provided with a first through hole, and the bottom plate is provided with a heat transfer pipe fixing assembly; the mixed fluid flows from the fluid mixing section through the first through hole into the test section; and two ends of the plurality of non-linear heat transfer pipes are connected to the bottom plate through the heat transfer pipe fixing assembly.

3. The apparatus according to claim 2, wherein the support assembly further comprises a support plate;
wherein the support plate is connected to the housing of the test section, the support plate is located between the bottom plate and the fluid outlet section, and the support plate is arranged on a straight section of each of the non-linear heat transfer pipes; and the support plate is provided with a second through hole, the mixed fluid flows through the second through hole into the fluid outlet section, and the plurality of non-linear heat transfer pipes pass through the second through hole and are in clearance fit with the second through hole in the support plate.

4. The apparatus according to claim 3, wherein the support plate comprises a first support plate and a second support plate;
wherein the first support plate and the second support plate are arranged in sequence in the test section, and the first support plate and the second support plate are both arranged on the straight section of the plurality of non-linear heat transfer pipes.

5. The apparatus according to claim 1, wherein the support assembly further comprises an anti-vibration assembly and a fixing assembly;
wherein the anti-vibration assembly is arranged in a V-shape on a bending section of each of the non-linear heat transfer pipes; the anti-vibration assembly is provided with a third through hole respectively on two ends; and at least five anti-vibration assemblies are provided, and each of the anti-vibration assemblies comprises at least six layers of anti-vibration bars;
the fixing assembly comprises at least five pairs of anti-vibration bar pull rods, and each pair of the anti-vibration bar pull rods passes through the third through hole in one of the anti-vibration assemblies and is connected to a housing of the test section.

6. The apparatus according to claim 5, wherein the support assembly further comprises collars;
wherein the collars sleeve the anti-vibration bar pull rods, and distances between different layers of anti-vibration bars in each of the anti-vibration assemblies are determined by the collars.

7. The apparatus according to claim 1, wherein the collection device further comprises:
acceleration sensors arranged on inner walls of the plurality of non-linear heat transfer pipes, a housing of the flow channel groove, and a test bench; the acceleration sensors being configured to measure acceleration data of the plurality of non-linear heat transfer pipes and the test apparatus;
pressure sensors arranged on an outer wall of a target heat transfer pipe in the plurality of non-linear heat transfer pipes and pressure measuring points outside the plurality of non-linear heat transfer pipes and configured to measure pressure data of the plurality of non-linear heat transfer pipes and the fluid outside the plurality of non-linear heat transfer pipes; a distance between the target heat transfer pipe and the support assembly meeting a preset distance condition;
a temperature sensor arranged on an external outlet pipeline connected to the fluid outlet section and configured to measure temperature data of an entire test circuit;
flow detection sensors arranged on the fluid inlet section and the fluid mixing section and configured to detect a flow rate of the fluid inputted into the fluid inlet section and a flow rate of the fluid inputted into the fluid mixing section.

8. The apparatus according to claim 1, wherein the fluid mixing section comprises a first mixing section and a second mixing section connected in sequence; and a first fluid flows through the fluid inlet section into the first mixing section; wherein the first mixing section comprises a second fluid inlet pipe, and a second fluid passes through the second fluid inlet pipe into the first mixing section and is mixed with the first fluid in the first mixing section to generate an intermediate mixed fluid;
the second mixing section is provided with a packing layer, and the intermediate mixed fluid flows from the first mixing section into the second mixing section and is mixed through the packing layer to generate the mixed fluid.

9. The apparatus according to claim 8, wherein the fluid inlet section comprises a first fluid inlet pipe, a fourth through hole, and a water baffle;
the first fluid flows into the test apparatus through the first fluid inlet pipe; the fourth through hole is provided at one end of the first fluid inlet pipe, and the first fluid flows into the first mixing section through the fourth through hole; and the water baffle is arranged on one side of the fourth through hole to evenly distribute a flow rate of the first fluid.

10. The apparatus according to claim 8, wherein the test simulation body further comprises a viewing window;
wherein the viewing window is arranged on a housing of the test apparatus between the fluid mixing section and the test section and is configured to observe a mixing situation of the first fluid and the second fluid.

11. The apparatus according to claim 1, wherein the non-linear heat transfer pipes comprise any one of U-shaped heat transfer pipes and spiral heat transfer pipes.

12. A flow-induced vibration test simulation method, applied to the flow-induced vibration test apparatus according to any one of claims 1 to 11, the method comprising:
controlling the mixed fluid to flow into the test section according to preset fluid flow parameters; the preset fluid flow parameters comprising a fluid flow velocity parameter and a fluid void fraction parameter;
collecting, through the collection device upon the mixed fluid flows into the test section, test data when the flow-induced vibration test apparatus undergoes flow-induced vibration; the test data comprising at least one of acceleration data, strain data, pressure data, temperature data, and flow rate data;
analyzing the preset fluid flow parameters and the test data corresponding to the preset fluid flow parameters to determine vibration features when the plurality of non-linear heat transfer pipes undergo flow-induced vibration.

13. A flow-induced vibration test simulation apparatus, comprising:
a mixed fluid inflow module configured to control the mixed fluid to flow into the test section according to preset fluid flow parameters; the preset fluid flow parameters comprising a fluid flow velocity parameter and a fluid void fraction parameter;
a test data collection module configured to collect, through a collection device when the mixed fluid flows into the test section, test data when a flow-induced vibration test apparatus undergoes flow-induced vibration; the test data comprising at least one of acceleration data, strain data, pressure data, temperature data, and flow rate data;
a test data analysis module configured to analyze the preset fluid flow parameters and the test data corresponding to the preset fluid flow parameters to determine vibration features when a plurality of non-linear heat transfer pipes undergo flow-induced vibration.

14. A flow-induced vibration test apparatus design method, applied to the flow-induced vibration test apparatus according to any one of claims 1 to 11, the method comprising:
acquiring an initial model of the flow-induced vibration test apparatus; the initial model comprising an initial flow channel groove and an initial test simulation body, the initial test simulation body comprising a plurality of non-linear heat transfer pipes and a support assembly;
performing flow-induced vibration analysis and flow field analysis on the initial model to determine first initial parameters of the initial flow channel groove and the plurality of non-linear heat transfer pipes; the first initial parameters being parameters of the initial flow channel groove and the plurality of non-linear heat transfer pipes when a preset envelope requirement is met when the initial model undergoes flow-induced vibration and a flow field of the initial model meets a preset flow field requirement;
assigning the first initial parameters to the initial flow channel groove in the initial model and the plurality of non-linear heat transfer pipes respectively to generate a first intermediate model, and performing stress analysis on the first intermediate model to determine second initial parameters of the support assembly in the first intermediate model when a preset stress condition is met;
assigning the second initial parameters to the support assembly in the first intermediate model to obtain a second intermediate model, and conducting a fluid mixing experiment on the second intermediate model to determine third initial parameters of the initial flow channel groove in the second intermediate model when a preset fluid mixing experiment condition is met;
generating the flow-induced vibration test apparatus based on the first initial parameters of the initial flow channel groove and the plurality of non-linear heat transfer pipes, the second initial parameters of the support assembly, and the third initial parameters of the initial flow channel groove.

15. A computer device, comprising a memory and a processor, the memory storing a computer program, wherein the processor, when executing the computer program, implements operations of the method according to claim 12.

16. A computer-readable storage medium, having a computer program stored therein, wherein when the computer program is executed by a processor, operations of the method according to claim 12 are implemented.

17. A computer program product, comprising a computer program, wherein when the computer program is executed by a processor, operations of the method according to claim 12 are implemented.
